(19) **Europäisches Patentamt / European Patent Office / Office européen des brevets**

(11) **EP 2 325 973 B1**

(12) **EUROPEAN PATENT SPECIFICATION**

(45) Date of publication and mention
of the grant of the patent:
**02.08.2017 Bulletin 2017/31**

(51) Int Cl.:
**B60L 1/00** *(2006.01)* **B60L 1/02** *(2006.01)*
**B60L 15/20** *(2006.01)* **H02J 7/00** *(2006.01)*

(21) Application number: **10191759.9**

(22) Date of filing: **18.11.2010**

(54) **Control system for electric vehicle, and electric vehicle equipped therewith**

Steuersystem für Elektrofahrzeug und Elektrofahrzeug damit

Système de contrôle pour véhicule électrique, et véhicule électrique équipé de celui-ci

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.11.2009 JP 2009262527**

(43) Date of publication of application:
**25.05.2011 Bulletin 2011/21**

(73) Proprietor: **Hitachi, Ltd.**
**Tokyo 100-8280 (JP)**

(72) Inventors:
• **Nasu, Shingo**
**Tokyo 100-8220 (JP)**

• **Yokoyama, Atsushi**
**Tokyo 100-8220 (JP)**
• **Osaka, Tadashi**
**Tokyo 100-8220 (JP)**
• **Sawada, Itsuro**
**Tokyo 100-8220 (JP)**

(74) Representative: **MERH-IP Matias Erny Reichl
Hoffmann
Patentanwälte PartG mbB
Paul-Heyse-Strasse 29
80336 München (DE)**

(56) References cited:
**US-A- 5 507 153          US-A- 5 834 922
US-A1- 2002 062 183   US-A1- 2004 124 703
US-A1- 2005 268 632**

**Description**

The present invention relates to a control system for an electric vehicle, and to an electric vehicle equipped with this control system.

A plurality of load devices such as one or more electricity storage devices, an electric motor and a temperature regulation device, an electrical power conversion device and so on are mounted to an electric vehicle, and control of these load devices is performed on the basis of command values such as the amount with which an accelerator pedal or a brake pedal is depressed by the driver, a temperature setting, and so on. With an electric vehicle, the greatest problem is to increase the range, and methods for increasing the range are, for example, to increase the amount of energy available by increasing the number of electricity storage devices mounted to the vehicle, to save energy by enhancing the efficiency of the load devices themselves, to save energy by enhancing the efficiency of control, and the like. For example, refer to Japanese Laid-Open Patent Publication 2008-070326.

With the prior art devices described above, control of the drive power with good energy efficiency is performed on the basis of the presumed path of travel. This presumption as to the path of travel is performed on the basis of a map in a navigation device or the like and sensor information, so that drive power control is performed on the basis of the presumed distance of travel and the average vehicle speed, and on the basis of road characteristic information such as gradients and so on.

Reference is also made to US Laid-Open Patent Publication 2004/124703, which discloses an apparatus for driving and controlling plural on-vehicle electrical loads. In this apparatus, an on-vehicle power supply generates power to be supplied the loads each having a priority. A power calculating device calculates a current available amount of the power to be supplied from the power supply, and a priority changing device changes one or more of the priorities on the basis of inputted information about a vehicle condition, the information including conditions of the loads. A command producing device produces a command value indicative of an amount of the power to be supplied to each of the loads by using the priorities. In this case, a sum of the power to be supplied to each load is kept within the available amount of the power to be supplied. A controller controls the power to be distributed to each of the loads on the basis of the command value.

Further reference is made to US Laid-Open Patent Publication 2002/062183, which discloses a control system for a hybrid vehicle. The control system has a consumed electric power calculator, which calculates electric power consumption, and a battery state calculator, which calculates battery state SOC of a battery. Based on this battery state, a physical quantity per effective electric power calculator calculates a physical quantity per effective power when electric power equal to or greater than consumed electric power is generated for various electric power consumption and electric power generation, and a threshold value calculator obtains a threshold value having the same unit as that of the physical quantity per effective power using predetermined calculation for selecting operating modes of a generator and The battery. An operating mode selector selects operating modes for an engine and the battery based on comparison between the above threshold value and the physical quantity per effective power corresponding to the consumed electric power, and a target generated electric power calculator calculates target electric power generation. An electric power distribution controller controls the engine and the motor.

However, with prior art devices such as described above, sufficient attention has not been paid to the overall energy efficiency of the electric vehicle when considered as a unitary system that consists of a plurality of load devices, and there is room for improvement of the energy efficiency of the system as a whole.

In view of the above, the present invention provides control systems for an electric vehicle, having the features of the respective independent claims. Preferred embodiments of the invention are described in the dependent claims.

According to a 1st aspect, a control system for an electric vehicle, comprises: an electricity storage device that performs charging and discharging of electrical power; a plurality of load devices that receive supply of electrical power from the electricity storage device and perform operations; and/or a control device that controls the electricity storage device and the plurality of load devices. And when electrical power is supplied from the electricity storage device to the plurality of load devices, the control device calculates a charge/discharge efficiency of the electricity storage device and/or a working efficiency of each of the load devices, and/or regulates an amount of electrical power supplied from the electricity storage device to each of the load devices, so as to enhance an overall efficiency of the electricity storage device and/or the plurality of load devices.

According to a 2nd aspect, in the control system for an electric vehicle according to the 1 st aspect: a electric machine for propelling the electric vehicle is included in the plurality of load devices; and when the electrical power for driving the electric machine varies, the control device regulates the electrical power supplied from the electricity storage device to the load devices other than the electric machine, so as to enhance the overall efficiency with the electrical power for the electric machine having varied.

According to a 3rd aspect, in the control system for an electric vehicle according to the 2nd aspect: a temperature regulation device that performs air conditioning of an interior of a passenger compartment or cooling of an onboard device is included in the load devices other than the electric machine; and the control device reduces the electrical power for driving the temperature regulation device when the electrical power for driving the electric machine has been increased, so that the overall efficiency after increase of the electrical power supplied to the electric machine is enhanced, and increases the electrical power for driving the temperature regulation device when the electrical power for driving the electric machine has been decreased, so that the overall efficiency after decrease of the electrical power supplied to the electric machine is enhanced.

According to a 4th aspect, in the control system for an electric vehicle according to the 2nd aspect: an electrical power conversion device that converts the electrical power of the electricity storage device and supplies electrical power to another electricity storage device is included in the load devices other than the electric machine; and the control device reduces the electrical power supplied to the power conversion device when the electrical power for driving the electric machine has been increased, so that the overall efficiency after increase of the electrical power supplied to the electric machine is enhanced, and increases the electrical power supplied to the power conversion device when the electrical power for driving the electric machine has been decreased, so that the overall efficiency after decrease of the electrical power supplied to the electric machine is enhanced.

According to a 5th aspect, in the control system for an electric vehicle according to any one of the 1 st through 4th aspects, it is preferred that when electrical power is supplied from the electricity storage device to the plurality of load devices, the control device regulates the electrical power supplied from the electricity storage device to each of the plurality of load devices, so as to reduce fluctuations of the electrical power discharged from the electricity storage device.

According to a 6th aspect, in the control system for an electric vehicle according to any one of the 1 st through 5th aspects, it is preferred that the control device calculates electrical power requested to each of the load devices based upon an amount of actuation by a driver and a running state of the electric vehicle that are detected by a plurality of detectors.

According to a 7th aspect, in the control system for an electric vehicle according to the 6th aspect, it is preferred that each of the load devices measures electric power used for actually being operated by using a plurality of detectors, and also calculates a working efficiency based upon the measured electrical power and the electrical powers that are supplied to each of the load devices.

According to an 8th aspect, in the control system for an electric vehicle according to the 7th aspect, it is preferred that the control device determines the electrical power to be supplied to each of the load devices by correcting the requested electrical power for each of the load device by the working efficiency of each of the load device.

According to a 9th aspect, in the control system for an electric vehicle according to any one of the 2nd through 8th aspects, it is preferred that the control device forecasts a future running state of the electric vehicle based upon a current running state of the electric vehicle detected by a plurality of detectors and based upon road map information and position measurement information, also, based upon the future running state resulting from forecasting, forecasts electric power that will be supplied from the electricity storage device to each of the load devices and the charge/discharge efficiency of the electricity storage device and the working efficiency of each of the load devices that will accompany the forecasted electrical power, and regulates the electrical power supplied from the electricity storage device to each of the load devices in advance so as to enhance the overall efficiency in that future running state.

According to a 10th aspect, in the control system for an electric vehicle according to the 9th aspect, it is preferred that the control device forecasts variation of the electric power that will be supplied for driving the electric machine based upon the future running state resulting from forecasting, and, for a load device other than the electric machine for which the electrical power to be supplied is regulated along with the variation of the electrical power supplied to the electric machine, temporarily increases in advance the electrical power supplied to the load device before the electrical power supplied to the electric machine increases, and temporarily reduces in advance the electrical power supplied to the load device before the electrical power supplied to the electric machine decreases.

According to an 11th aspect, in the control system for an electric vehicle according to any one of the 1 st through 10th aspects, it is preferred that: a temperature regulation device that performs air conditioning of the interior of a passenger compartment or cooling of an onboard device is included in the plurality of load devices; there is further provided a thermal storage device that accumulates heat or cold generated by the electricity storage device and the plurality of load devices; and the temperature regulation device performs heating or air conditioning of the interior of the passenger compartment and cooling of an onboard device using heat or cold accumulated in the thermal storage device, thus reducing the electrical power supplied from the electricity storage device to the temperature regulation device.

According to a 12th aspect, a control system for an electric vehicle, comprises: an electricity storage device that performs charging and discharging of electrical power; a plurality of load devices that receive supply of electrical power from the electricity storage device and perform various operations; and a control device that controls the electricity storage device and the plurality of load devices. And when electrical power is supplied from the electricity storage device to the plurality of load devices, the control device regulates an amount of electrical power supplied from the electricity storage device to each of the load devices, so as to reduce fluctuations of the electrical power discharged from the electricity storage device.

According to a 13th aspect, in the control system for an electric vehicle according to the 12th aspect, it is preferred that: a electric machine for propelling the electric vehicle is included in the plurality of load devices; and the control device regulates the electrical power supplied from the electricity storage device to a load device other than the electric machine, so as to reduce fluctuations of the electrical power discharged from the electricity storage device when the electrical power for driving the electric machine varies.

According to a 14th aspect, in the control system for an electric vehicle according to the 13th aspect, it is preferred that the control device forecasts a future running state of the electric vehicle based upon a current running state of the electric vehicle detected by a plurality of detectors and based upon road map information and position measurement information, also, based upon the future running state resulting from forecasting, forecasts variation of the electric power that will be supplied for driving the electric machine, and, for a load device other than the electric machine for which the supply of electrical power is regulated along with the variation of the electrical power supplied to the electric machine, temporarily increases in advance the electrical power supplied to the load device before the electrical power supplied to the electric machine increases, and temporarily reduces in advance the electrical power supplied to the load device before the electrical power supplied to the electric machine decreases.

According to a 15th aspect, an electric vehicle comprises a control system according to any one of the 1st through 14th aspects.

BRIEF DESCRIPTION OF THE DRAWINGS

Fig. 1 is an explanatory figure showing the structure of an electric vehicle that is equipped with a control system according to a first embodiment of the present invention;
Fig. 2 is a figure showing the structure of this control system according to the first embodiment of the present invention;
Fig. 3 is a figure showing the structure of another control system according to a variant of the first embodiment of the present invention;
Fig. 4 is a figure showing variation of the efficiencies of various load devices controlled by this control system with respect to power, according to the first embodiment of the present invention;
Fig. 5 is a figure showing variation of the overall system efficiency with this control system according to the first embodiment of the present invention;
Fig. 6 is a flow chart of a program executed by this control system according to the first embodiment of the present invention;
Fig. 7 is a figure showing the results of control of the power loading of the various load devices by this control system according to the first embodiment of the present invention;
Fig. 8 is a figure showing the variation of the overall system efficiency with respect to power, corresponding to the results of control of the power loading of the various load devices by this control system according to the first embodiment of the present invention;
Fig. 9 is a figure showing results when fluctuations of electrical power produced by an electricity storage device are not controlled by this control system according to the first embodiment of the present invention;
Fig. 10 is a figure showing the results when fluctuations of electrical power produced by the electricity storage device are controlled by this control system according to the first embodiment of the present invention;
Fig. 11 is a figure showing a control system according to a second embodiment of the present invention;
Fig. 12 is a figure showing the results of control of the power loading of various load devices by this control system according to the second embodiment of the present invention; and
Fig. 13 is a figure showing the structure of a vehicle to which a control system according to a third embodiment of the present invention is mounted.

DESCRIPTION OF THE PREFERRED EMBODIMENTS

Embodiment 1

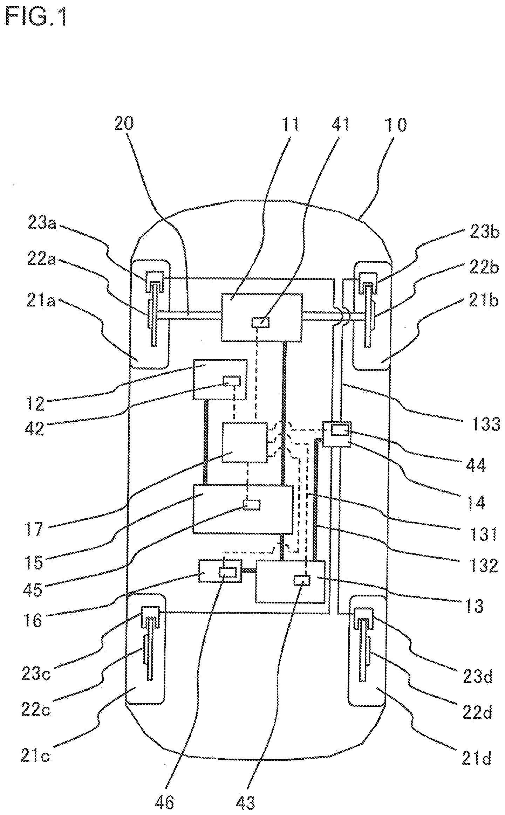

The first embodiment of the control system for an electric vehicle according to the present invention, and of an electric vehicle equipped therewith, will now be explained with reference to Figs. 1 through 10. While in this first embodiment the present invention is shown as applied to an electric vehicle of the front wheel drive type, the present invention could also be applied to an electric vehicle of the rear wheel drive type or of the four wheel drive type, to a hybrid electric vehicle that is also provided with an internal combustion engine, or to an electric vehicle for construction, an electric vehicle for a railroad, or indeed an electric vehicle of any kind.

Fig. 1 shows the structure of an electric vehicle 10 to which a control system according to the first embodiment is mounted. This electric vehicle 10 according to the first embodiment includes a motor-generator (an electric machine) 11, a temperature regulation device 12, an electrical power conversion device 13, a hydraulic pressure generation device 14, a electricity storage device 15, a second electricity storage device 16, a controller 17, drive shafts 20, vehicle wheels 21 a through 21d, disk rotors 22a through 22d, brake calipers 23a through 23d, signal lines 131, electrical power lines 132, hydraulic conduits 133, sensors 41 through 46, and so on.

The electric motor-generator 11 is a rotating DC or AC electrical machine that converts electrical energy supplied from the electricity storage device 15 into mechanical energy, and constitutes one of the load devices of this electric vehicle. An electrical power conversion device such as a converter or an inverter or the like is included in this motor-generator 11, and this electrical power conversion device performs voltage conversion and/or conversion to AC voltage of DC electrical power from the electricity storage device 15, thus producing electrical power for supply to the motor-generator 11 to drive it. And the mechanical energy produced by the motor-generator 11 is converted into rotational motion of its shaft, with this rotational power being transmitted to the front wheels 21a and 21b via a speed reduction device, a differential gear assembly, and the drive shafts 20.

Furthermore, during the braking process, the motor-generator 11 operates as a generator that generates electricity due to the rotation of the drive shafts 20. Not only is the regenerated energy generated by the motor-generator 11 supplied to the electricity storage device 15, but also the regenerative braking force created by the motor-generator 11 during this electricity generation operates upon the front wheels 21 a and 21b as a braking force. One or more sensors 41 are provided to the motor-generator 11 and measure its current, voltage, torque, or the like. For example, a torque sensor may be a non-contact powered strain sensor; in any case, in the present invention the numbers and the types of the sensors provided to the motor-generator 11 are not particularly limited. The electric motor-generator (the electric machine) 11 may be referred to as a motor 11 when it works as a motor, and the electric motor-generator 11 may be referred to as a generator 11 when it works as a generator.

The temperature regulation device 12 is a heat exchanger that includes a condenser, an expansion valve, an evaporator, a compressor and so on, and constitutes one of the load devices of this electric vehicle. During air conditioning of the passenger compartment, due to electrical energy supplied from the electricity storage device 15, a refrigerant is compressed by the operation of the compressor, and this refrigerant is expanded via the evaporator by the expansion valve, so that it reaches a low temperature and performs exchange of heat with the air in the vehicle passenger compartment, thus cooling this interior air. And, during heating of the passenger compartment, the compressor is operated in the opposite way to its operation during air conditioning, so that the evaporator functions as a condenser while the condenser functions as an evaporator, and thereby, after having been heated to a high temperature by the compressor via the condenser, the refrigerant performs exchange of heat with the air in the vehicle passenger compartment, thus heating this interior air.

One or more sensors 42 are provided to this temperature regulation device 12 and measure its current, voltage, torque, or the like. For example, a temperature sensor may be a thermocouple; in any case, in the present invention the numbers and the types of the sensors provided to the temperature regulation device 12 are not particularly limited. It should be understood that, while the temperature regulation device 12 of this first embodiment is taken as being an air conditioning device that cools or heats a refrigerant, it could also be a device that cools or heats cooling water or antifreeze that is used for temperature regulation of onboard devices such as the motor-generator 11 or the like; in other words, in the present invention, the thermal medium that is cooled or heated by the temperature regulation device 12 is not to be considered as being particularly limited.

The electrical power conversion device 13 is a voltage conversion device that raises or lowers the voltage of the electrical energy supplied from the electricity storage device 15 and that supplies the resulting electrical energy to the hydraulic pressure generation device 14 and to the second electricity storage device 16, and constitutes one of the load devices of this electric vehicle. One or more sensors 43 are provided to this electrical power conversion device 13 for measuring its current, voltage, or the like. For example, a current sensor may be a non contact type clamp type sensor; in any case, in the present invention, the numbers and the types of the sensors provided to the electrical power conversion device 13 are not particularly limited.

The hydraulic pressure generation device 14 generates hydraulic pressures according to commands from either one or both of a brake pedal that is operated by the driver, and the controller 17. The hydraulic pressures generated by this hydraulic pressure generation device 14 are transmitted via hydraulic conduits 133 to brake calipers 23a through 23d, and operate these brake calipers 23a through 23d. One or more sensors 44 are provided to this hydraulic pressure generation device 14 for measuring its current, voltage, hydraulic pressure, or the like. For example, a hydraulic pressure sensor may be a strain gauge type pressure sensor; in any case, in the present invention, the numbers and the types of the sensors provided to the hydraulic pressure generation device 14 are not particularly limited.

A friction braking system includes the disk rotors 22a through 22d and the brake calipers 23a through 23d. Each of the disk rotors 22a through 22d is fixed to one of the vehicle wheels 21 a through 21d, and rotates integrally with that vehicle wheel 21a through 21d. And each of the brake calipers 23a through 23d includes a cylinder, a piston, pads and so on not shown in the figures. The pistons are shifted within the cylinders by the hydraulic pressure generated by the hydraulic pressure generation device 14, and thereby the pads are impelled by these pistons and press against the disk rotors 22a through 22d. Frictional forces against the disk rotors 22a through 22d are thus created due to this pressing of the pads against the disk rotors 22a through 22d, and these frictional forces act as forces to brake the vehicle wheels 21 a through 21 d, so that braking forces are generated between the vehicle wheels 21a through 21 d and the surface of the road.

The electricity storage device 15 is an electricity storage device that supplies electrical energy, in other words electrical power, to a plurality of load devices such as, principally, the motor-generator 11, the temperature regulation device 12, the electrical power conversion device 13, and so on. The drive loads of these load devices, and the magnitudes of the electrical energies supplied to them by the electricity storage device 15, are controlled by the controller 17. One or more sensors 45 are provided to this electricity storage device 15 for measuring its current, voltage, internal resistance, or the like. For example, a current sensor may be a non contact type clamp type sensor; in any case, in the present invention, the numbers and the types of the sensors provided to the electricity storage device 15 are not particularly limited.

The second electricity storage device 16 is an electricity storage device that operates at a lower voltage than the electricity storage device 15, and that accumulates electrical energy supplied via the electrical power conversion device 13, or supplies this accumulated electrical energy to an auxiliary machinery load device, such as the hydraulic pressure generation device 14 or the like. One or more sensors 46 are provided to this second electricity storage device 16 for measuring its current, voltage, internal resistance, or the like. For example, a current sensor my be a non contact type clamp type sensor; in any case, in the present invention, the numbers and the types of the sensors provided to the second electricity storage device 16 are not particularly limited.

The electricity storage device 15 and the load devices 11, 12, and 13 described above are connected together via the signal lines 131 along which information relating to power and efficiency, to be described hereinafter, is transmitted and received in the CAN (Controller Area Network) format, and the electrical power lines 132 that supply electrical energy from the electricity storage device 15 to the load devices 11, 12, and 13. It should be understood that while, in this embodiment, it is supposed that the format of the signals transmitted and received along the signal lines 131 is the CAN format, this format could also be the LIN (Local Interconnect Network) format or the FlexRay format or the like; in any case, in the present invention the formats of the signals that are transmitted and received are not particularly limited.

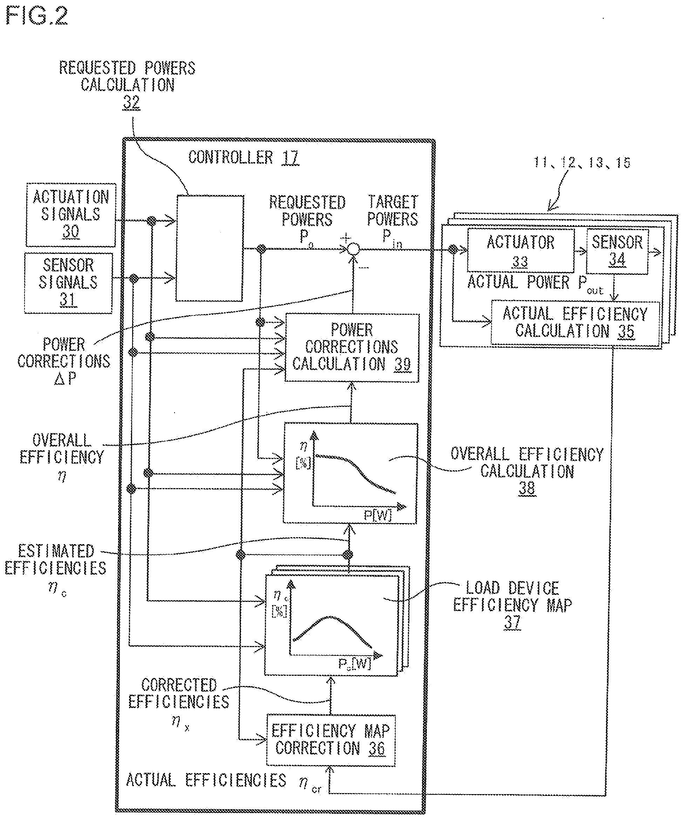

The structure and operation of the control system of this embodiment of the present invention that includes the controller 17, the electricity storage device 15, the load devices 11, 12, and 13 and so on will now be explained with reference to Figs. 2 through 10. It should be understood that while, in this embodiment, the explanation of objects controlled by the controller 17 is limited to the motor-generator 11, the temperature regulation device 12, the electrical power conversion device 13, and the electricity storage device 15, the present invention could also be applied to the hydraulic pressure generation device 14 and to other load devices: in the present invention, the load devices that constitute control objects are not to be considered as being particularly limited.

As shown in Fig. 2, the controller 17 of this first embodiment inputs actuation signals 30 from actuation devices of various types not shown in the figures, navigation and sensor signals 31 from a navigation device and sensors of various types not shown in the figures, and the actual efficiencies in real time of the electricity storage device 15 and the load devices 11, 12, and 13 from the electricity storage device 15 and the plurality of load devices that are the motor-generator 11, the temperature regulation device 12, the electrical power conversion device 13, and so on. And the controller 17 calculates optimum powers (i.e. target powers) $P_{in}$ according to the traveling conditions and so on, and outputs these to the electricity storage device 15 and to the various load devices 11, 12, and 13.

Here, the powers (i.e. the rates of working) are physical quantities that represent the amounts of energy consumed per unit time, and are generally expressed in units of watts (W). Of course, provided that the physical meaning is the same, any name or units may be employed; the present invention is not to be considered as being limited to any particular name or units for the powers.

The actuation signals 30 are signals that specify the amounts of actuation by the driver of the accelerator pedal and the brake pedal, and the set temperature upon the temperature regulation device 12 and/or its set amount of air flow and so on. And the navigation and sensor signals 31 are signals from a navigation device that specify map information and/or position measurement information and so on, and signals transmitted from sensors of various types that specify vehicle speed and/or acceleration and so on.

The actual efficiencies are the ratios of the powers $P_{out}$ (i.e. the actual powers) at which actuators 33 within the electricity storage device 15 and the various load devices 11, 12, and 13 actually work, to the target powers $P_{in}$ that are inputted to the electricity storage device 15 and the load devices 11, 12, and 13 respectively. These efficiencies are the ratios of the amounts of energy that are actually employed for useful work, to the amounts of energy that are consumed, respectively, and, provided that the physical meaning is the same, any name or units may be employed; the present invention is not to be considered as being limited to any particular name or units for the efficiencies. The efficiency of the electricity storage device 15 is termed its charge/discharge efficiency, while the efficiencies of the various load devices 11, 12, and 13 are termed their working efficiencies (driving efficiencies).

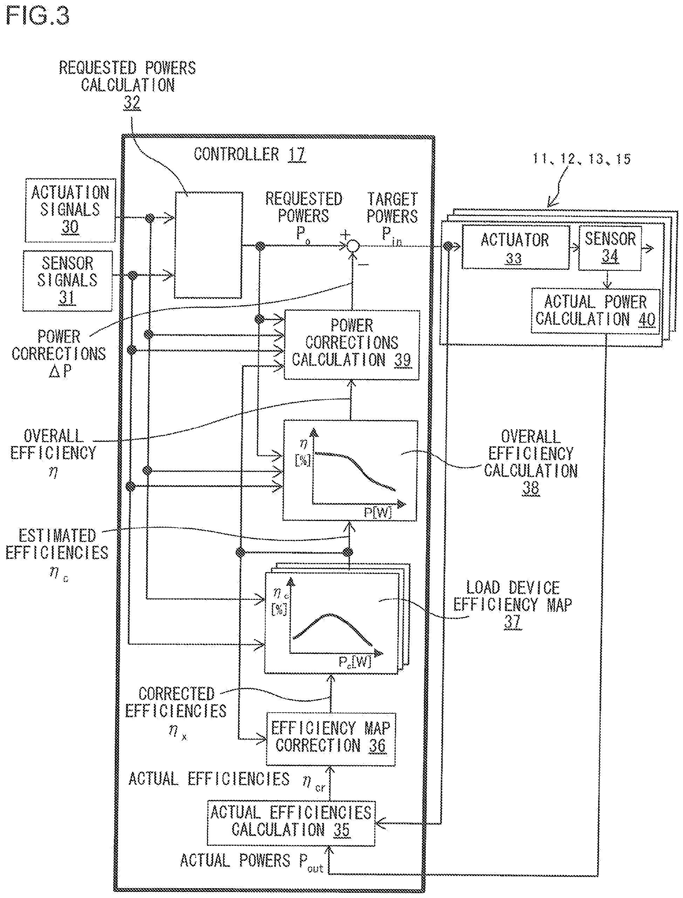

The actual output powers $P_{out}$ are measured by sensors 34 of the electricity storage device 15 and the various load devices 11, 12, and 13, and are sent to actual efficiency calculations 35. In these actual efficiency calculations 35, the actual efficiencies $\eta_{cr}$ are calculated by dividing the actual powers $P_{out}$ by the target powers $P_{in}$ that are transmitted to the electricity storage device 15 and the various load devices 11, 12, and 13. It should be understood that while, in Fig. 2, an example is shown in which the actual powers $P_{out}$ are measured by the sensors 34 and the actual efficiencies $\eta_{cr}$ are calculated in the electricity storage device 15 and the various load devices 11, 12, and 13, it would also be acceptable, as shown in Fig. 3, to calculate the actual powers $P_{out}$ by actual power calculations 40 on the basis of signals representing rotational speed and/or torque or the like detected by the sensors 34 of the electricity storage device 15 and the various load devices 11, 12, and 13, to send the target powers $P_{in}$ and the actual powers $P_{out}$ to the controller 17, and to calculate the actual efficiencies $\eta_{cr}$ within the controller 17 by an actual efficiencies calculation 35; in the present invention, the method of measuring and/or calculating the actual powers $P_{in}$ and the actual efficiencies $\eta_{cr}$ are not to be considered as being particularly limited. Measurement and/or calculation of the actual powers $P_{in}$ and the actual efficiencies $\eta_{cr}$ of the electricity storage device 15 and the various load devices 11, 12, and 13 may be performed by the methods described above.

Next, the structure within the controller 17, and its operation, will be explained. By this controller 17: (1) the powers $P_o$ that the driver is requesting to the electricity storage device 15 and the various load devices 11, 12, and 13 (i.e. the requested powers) are calculated on the basis of the actuation signals 30 and the sensor signals 31; (2) powers $\Delta P$ (i.e. power corrections) by which these requested powers $P_o$ should be increased or decreased are calculated according to the states of the electricity storage device 15 and the various load devices 11, 12, and 13, such as the temperatures of the electricity storage device 15 and the various load devices 11, 12, and 13 and the SOC (State Of Charge) of the electricity storage device 15 and so on, and according to travel conditions such as the distance to the destination and the road gradient and so on; and then (3) the target powers $P_{in}$ are calculated by subtracting the power corrections $\Delta P$ from the requested powers $P_o$.

The requested powers $P_o$ are calculated by the requested powers calculation 32: for example, the power requested for the motor-generator 11 is calculated using a predetermined map or calculation equations, on the basis of amount of actuation signals such as the amount of accelerator opening and the amount of brake pedal depression by the driver and so on, and on the basis of sensor signals such as the current vehicle speed and so on. And the power corrections $\Delta P$ are calculated by a power corrections calculation 39 on the basis of the actuation signals 30 and the navigation and sensor signals 31, and on the basis of the requested powers $P_o$, estimated efficiencies $\eta_c$, and an overall efficiency $\eta$. This overall efficiency $\eta$ that is used by the power corrections calculation 39 is calculated in an overall efficiency calculation 38, by dividing the energy that is actually employed by the load devices 11, 12, and 13 for useful work, by the energy that is supplied from the electricity storage device 15.

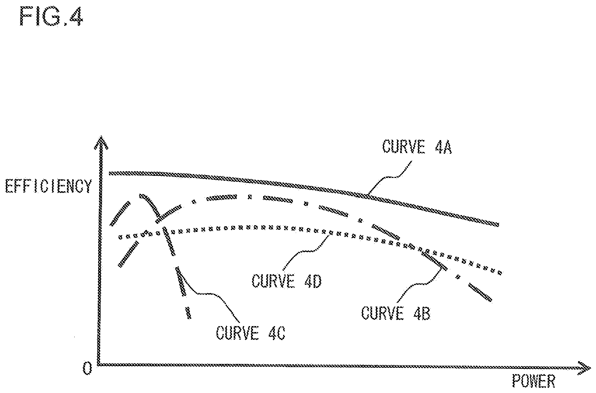

Fig. 4 shows the efficiencies of the electricity storage device 15 and the load devices 11, 12, and 13 with respect to power under conditions of a certain rotational speed, a certain torque, a certain temperature and so on: the curve 4A shows the efficiency of the electricity storage device 15, the curve 4B shows the efficiency of the motor-generator 11, the curve 4C shows the efficiency of the temperature regulation device 12, and the curve 4D shows the efficiency of the electrical power conversion device 13. The loss in the electricity storage device 15 increases in proportion to the square of the current, while the losses in the motor-generator 11, in the temperature regulation device 12, and in the electrical power conversion device 13 exhibit different variation tendencies, according to the specifications of those devices. The estimated efficiencies $\eta_c$ that are used in the overall efficiency calculation 38 are values extracted from a load device efficiency map 37 stored in the controller 17, in which efficiencies corresponding to states of the load devices, such as rotational speed, torque, temperature, and so on are stored, as shown in Fig. 4.

This load device efficiency map 37 is overwritten by corrected efficiencies $\eta_x$ that are calculated by an efficiency map correction 36 on the basis of the estimated efficiencies $\eta_c$ and the actual efficiencies $\eta_{cr}$. By feeding back these actual efficiencies $\eta_{cr}$ and thereby correcting the efficiency map 37, it is possible to reduce the errors in the efficiencies along with the passage of time. Furthermore, it is possible to correct for influences caused by fluctuations that cannot perfectly be expressed by the efficiency map 37. As a result, it is possible to prevent losses due to errors in the target powers $P_{in}$. In particular since, for the electricity storage device 15, the variations in the efficiency map 37 due to deterioration are comparatively large, accordingly the advantageous effect of loss suppression due to this correction procedure is great. It should be understood that while, in this first embodiment, an example is shown in which the load device efficiency map 37 is overwritten with the corrected efficiencies, it would also be acceptable to store these corrected efficiencies as a different efficiency map without overwriting the original efficiency map; with the present invention, the way in which the load device efficiency map 37 is corrected is not to be considered as being particularly limited.

Next, the details of the calculation in the overall efficiency calculation 38 will be explained. The overall efficiency $\eta$ may be calculated according to the following Equation

$$\eta = \frac{P_m \cdot \eta_m + P_a \cdot \eta_a + P_e \cdot \eta_e}{P_b} = \frac{P_m \cdot \eta_m + P_a \cdot \eta_a + P_e \cdot \eta_e}{(P_m + P_a + P_e) + \left(\dfrac{P_m + P_a + P_e}{V_b}\right)^2 \cdot R}$$

$$\cdots (1)$$

In Equation (1), $\eta$ is the overall efficiency, $P_m$ is the power supplied to the motor-generator 11, $\eta_m$ is the efficiency of the motor-generator 11, $P_a$ is the power supplied to the temperature regulation device 12, $\eta_a$ is the efficiency of the temperature regulation device 12, $P_e$ is the power supplied to the electrical power conversion device 13, $\eta_e$ is the efficiency of the electrical power conversion device 13, $V_b$ is the voltage of the electricity storage device 15, and R is the internal resistance of the electricity storage device 15.

The numerator in Equation (1) is the sum of the powers that the load devices 11, 12, and 13 actually use for performing useful work, while the denominator is the power that the electricity storage device 15 supplies to the load devices 11, 12, and 13; and, according to the number of load devices that are the objects for control, in the terms of Equation (1), either the products of the powers supplied to the load devices and their efficiencies, or the powers supplied to the load devices, are added together.

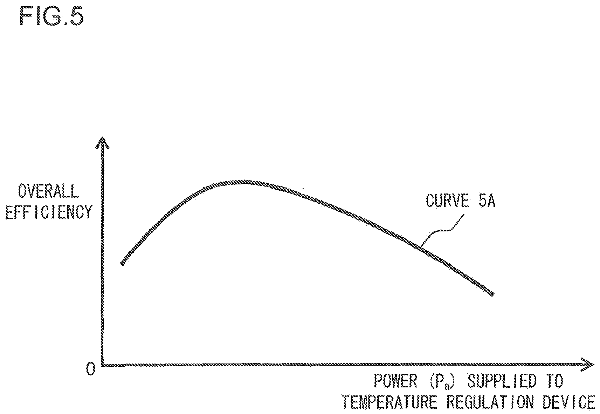

Fig. 5 shows the results of calculation of the overall efficiency $\eta$ when the powers supplied to the motor-generator 11 and to the electrical power conversion device 13 are fixed, and the power supplied to the temperature regulation device 12 is varied. The efficiency $\eta_a$ of the temperature regulation device 12 changes according to the supplied power $P_a$, and, since the efficiency of the electricity storage device 15 changes according to the power supplied to the various load devices, accordingly the overall efficiency $\eta$ exhibits a tendency to vary with respect to the power supplied to the temperature regulation device 12 as shown by the curve 5A. Fig. 5 is one example of the results of calculation of the overall efficiency $\eta$; a plurality of maps are generated corresponding to the power supplied to the various load devices and to their efficiencies.

While the overall efficiency $\eta$ that has been calculated by the method described above is transmitted to the power corrections calculation 39, in order to shorten the time required for the calculation by this power corrections calculation 39, a map of the overall efficiency $\eta$ based upon the requested power $P_o$ may also be selected at the time point of the overall efficiency calculation 38; in the present invention, the number of maps of the overall efficiency $\eta$ sent from the overall efficiency calculation 38 to the power corrections calculation 39 is not to be considered as being particularly limited.

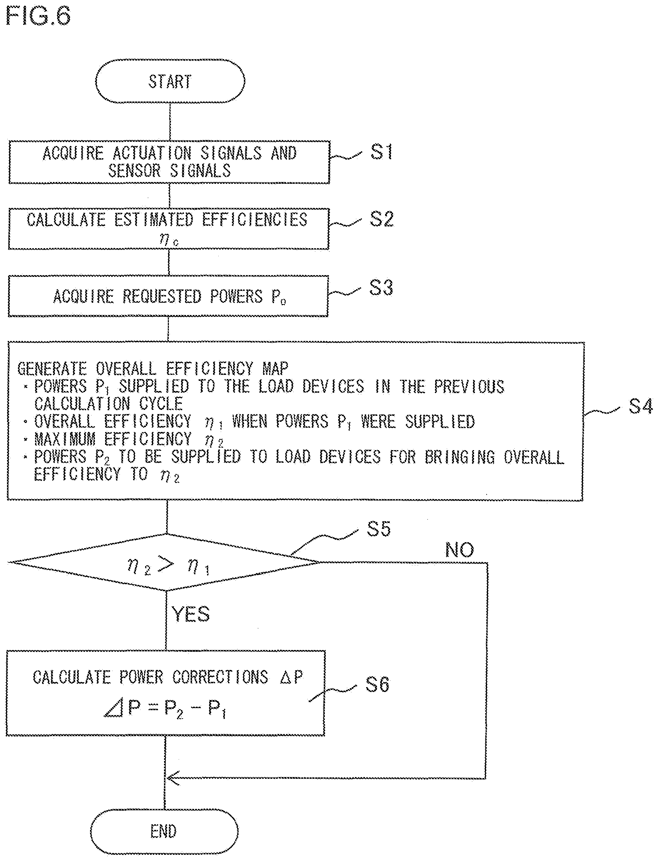

Next, the details of the calculation in the power corrections calculation 39 will be explained. The results of this power corrections calculation 39 are greatly different depending upon the objective of control (i.e. the control mode), such as whether emphasis is being placed upon power, or emphasis is being placed upon efficiency, or the like. In this first embodiment, power corrections $\Delta P$ are calculated for charging and discharging the electricity storage device 15, and for increasing or decreasing the drive loads upon the motor-generator 11, upon the temperature regulation device 12, and upon the electrical power conversion device 13, so as to enhance the overall efficiency. The way in which this calculation is performed will now be explained with reference to the flow chart shown in Fig. 6. It should be understood that this calculation of the corrected power $\Delta P$ shown in Fig. 6 is executed repeatedly on a predetermined cycle.

In a step S1 of this power corrections calculation 39, at the predetermined cycle, signals from the actuation signals 30 such as the amount of actuation by the driver of the accelerator pedal and/or the brake pedal, the set temperature and the set amount of air supply by the air conditioner and so on, and signals among the sensor signals 31 acquired by the various sensors relating to map information and position measurement information, vehicle speed, voltage and so on are acquired. Then in a step S2, on the basis of the signals that have been acquired, the estimated efficiencies of the various load devices are calculated from the efficiency map 37, and in the next step S3 the requested powers $P_o$ from the various load devices are calculated by the requested powers calculation 32.

Then in a step S4, along with a map of the overall efficiency $\eta$ being generated by the overall efficiency calculation 38 on the basis of the signals acquired or calculated in the steps S1 through S3, also the powers $P_1$ supplied to the load devices in the previous calculation cycle, the overall efficiency $\eta_1$ when these powers $P_1$ were supplied to the load devices in the previous calculation cycle, the maximum efficiency $\eta_2$, and the powers $P_2$ to be supplied to the load devices in order to bring the overall efficiency $\eta_1$ to the maximum efficiency $\eta_2$ are calculated. Here, the maximum efficiency $\eta_2$ is the overall efficiency as maximized by varying the powers supplied to the various load devices.

Then in the next step S5 a decision is made as to whether or not the overall efficiency $\eta_1$ that was calculated in the previous step S4 is less than the maximum efficiency $\eta_2$. If it is decided in this step S5 that the overall efficiency $\eta_1$ and the maximum efficiency $\eta_2$ are equal or substantially equal, then this control procedure terminates, since it is not necessary to make any corrections to the requested powers $P_o$. But if it is decided that the overall efficiency $\eta_1$ is

substantially less than the maximum efficiency $\eta_2$, then the flow of control proceeds to a step S6 in which power corrections $\Delta P$ are calculated by subtracting the powers $P_1$ supplied to the load devices one calculation cycle previously from the powers $P_2$ calculated in the step S4 to be supplied to the load devices in order to bring the overall efficiency $\eta_1$ to the maximum efficiency $\eta_2$.

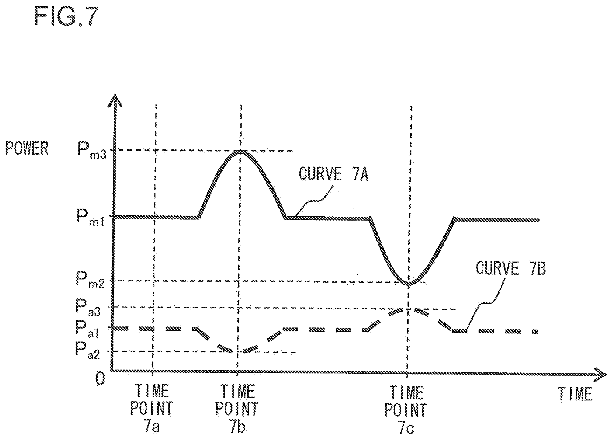

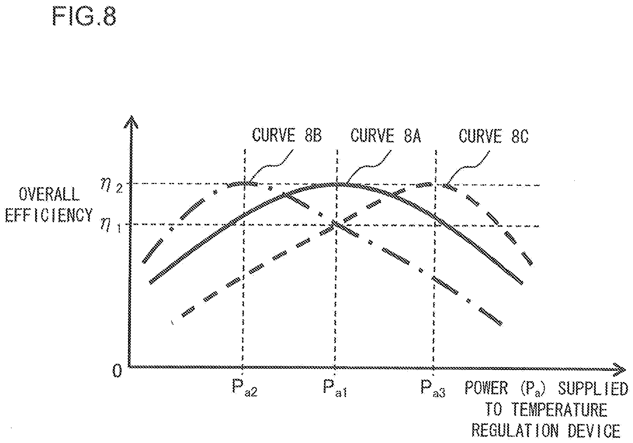

Figs. 7 and 8 show the results of varying the power $P_a$ supplied to the temperature regulation device 12 according to the method of calculation shown in Fig. 6. Fig. 7 shows the results of varying the power $P_a$ supplied to the temperature regulation device 12 so as to enhance the overall efficiency $\eta$ with respect to fluctuations of the power Pm supplied to the motor-generator 11, and the curve 7A shows the power $P_m$ supplied to the motor-generator 11, while the curve 7B shows the power $P_a$ supplied to the temperature regulation device 12. Moreover, Fig. 8 is the overall efficiency $\eta$ with respect to fluctuations of the power shown in Fig. 7, and the curve 8A is an overall efficiency map when the power $P_m$ supplied to the motor-generator 11 is $P_{m1}$ in Fig. 7, while the curve 8B is an overall efficiency map when the power $P_m$ supplied to the motor-generator 11 is $P_{m3}$ in Fig. 7, and the curve 8C is an overall efficiency map when the power $P_m$ supplied to the motor-generator 11 is $P_{m2}$ in Fig. 7.

If during the time period 7a of Fig. 7 the power $P_a$ supplied to the temperature regulation device 12 for the power $P_{m1}$ being supplied to the motor-generator 11 is taken as being $P_{a1}$, then the overall efficiency $\eta$ becomes $\eta_2$ upon the curve 8A of Fig. 8. Since this overall efficiency $\eta_2$ is the maximum efficiency upon the curve 8A, accordingly no calculation of any power correction $\Delta P$ is performed, so that the power $P_{a1}$ is supplied to the temperature regulation device 12.

But if, during the time period 7b of Fig. 7, similarly to the case during the time period 7a, the power $P_a$ supplied to the temperature regulation device 12 for the power $P_{m3}$ being supplied to the motor-generator 11 is taken as being $P_{a1}$, then the overall efficiency $\eta$ becomes $\eta_1$ upon the curve 8B of Fig. 8. Since this overall efficiency $\eta_1$ is less than the maximum efficiency $\eta_2$ upon the curve 8B, accordingly calculation of a power correction $\Delta P$ is performed. For this power correction $\Delta P$, a value is calculated by subtracting $P_{a1}$ from the power $P_{a2}$ at which the overall efficiency $\eta$ becomes the maximum efficiency $\eta_2$ upon the curve 8B. As a result, the power $P_a$ supplied to the temperature regulation device 12 during the time period 7b of Fig. 7 becomes $P_{a2}$, as shown by the curve 7B.

And if during the time period 7c of Fig. 7, similarly to the case during the time period 7a, the power $P_a$ supplied to the temperature regulation device 12 for the power $P_{m2}$ being supplied to the motor-generator 11 is taken as being $P_{a1}$, then the overall efficiency $\eta$ becomes $\eta_1$ upon the curve 8C of Fig. 8. Since this overall efficiency $\eta_1$ is less than the maximum efficiency $\eta_2$ upon this curve 8C, accordingly calculation of a power correction $\Delta P$ is performed. For this power correction $\Delta P$, a value is calculated by subtracting $P_{a1}$ from the power $P_{a3}$ at which the overall efficiency $\eta$ becomes the maximum efficiency $\eta_2$ upon the curve 8C. As a result, the power $P_a$ supplied to the temperature regulation device 12 during the time period 7c of Fig. 7 becomes $P_{a3}$, as shown by the curve 7B.

By varying the power $P_a$ supplied to the temperature regulation device 12 as described above, it is possible to enhance the overall efficiency $\eta$. It should be understood that although in this first embodiment the power corrections $\Delta P$ are calculated if the overall efficiency $\eta$ is less than the maximum efficiency $\eta_2$, it would also be acceptable only to calculate the power corrections $\Delta P$ if the difference between the overall efficiency $\eta$ and the maximum efficiency $\eta_2$ has become greater than a predetermined value, or only if the power supplied to the load devices has become greater than a predetermined value; with the present invention, the standard for calculating the power corrections $\Delta P$ is not to be considered as being particularly limited.

Furthermore while, in this first embodiment, the overall efficiency $\eta$ is enhanced by varying the power $P_a$ that is supplied to the temperature regulation device 12, it would also be acceptable to enhance the overall efficiency $\eta$ by varying the power supplied to the electrical power conversion device 13, or to some other load device; with the present invention, the number and the types of the load devices for which the drive load or loads are varied in order to enhance the overall efficiency $\eta$ are not to be considered as being particularly limited.

Next, the details of a calculation in the power corrections calculation 39 that aims at reduction of fluctuations of the electrical power produced from the electricity storage device 15 will be explained. Since the loss of energy due to charging and discharging of the electricity storage device 15 increases in proportion to the square of the current, when the case when the current is constant and the case when it fluctuates are compared together, the sum total of the energy losses is greater for the case when the current fluctuates, even if the sum total of the electrical power that is discharged is the same. Furthermore, it is desirable to reduce fluctuations of the power as much as possible, since such fluctuations promote deterioration of the electricity storage device 15.

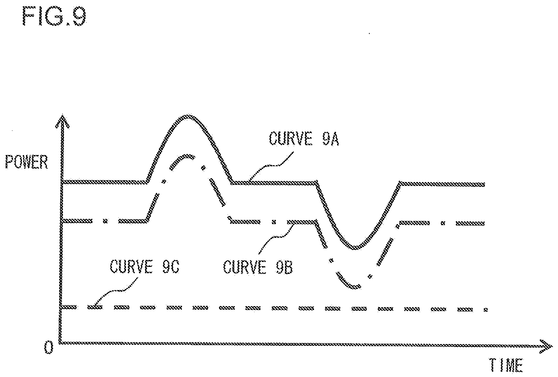

Fig. 9 shows the results when control is not performed for reducing fluctuations of the power supplied by the electricity storage device 15 to the various load devices, and is a figure for explanation the difference obtained as a result of the first embodiment. The curve 9A in Fig. 9 shows the power $P_b$ supplied by the electricity storage device 15 to the various load devices; the curve 9B shows the power $P_m$ supplied to the motor-generator 11; and the curve 9C shows the power $P_a$ supplied to the temperature regulation device 12. With the results shown in Fig. 9, since the powers $P_m$ and $P_a$ supplied to the motor-generator 11 and to the temperature regulation device 12 are not varied so as to reduce fluctuations of the power $P_b$ supplied by the electricity storage device 15 to the various load devices, accordingly the power $P_b$ supplied by the electricity storage device 15 to the various load devices fluctuates as shown by the curve 9A, and thereby increase of the losses of energy and deterioration of the electricity storage device 15 are undesirably promoted, as described above.

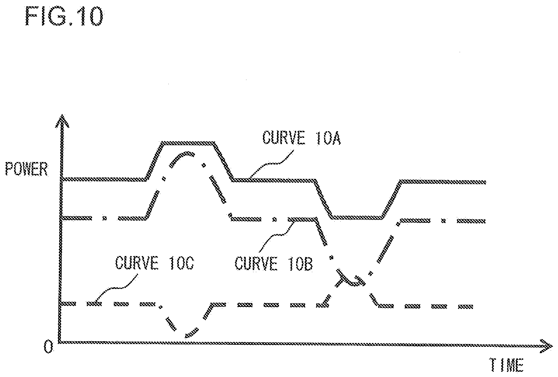

And Fig. 10 shows the results when, according to the first embodiment, control is performed for reducing fluctuations of the power $P_b$ supplied by the electricity storage device 15 to the various load devices: the curve 10A shows the power $P_b$ supplied by the electricity storage device 15 to the various load devices; the curve 10B shows the power $P_m$ supplied to the motor-generator 11; and the curve 10C shows the power $P_a$ supplied to the temperature regulation device 12. While the shape of the curve 10B is the same as that of the curve 9B, by varying the drive load of the temperature regulation device 12 as shown by the curve 10C, it is possible to reduce the fluctuations of the power $P_b$ supplied by the electricity storage device 15 to the various load devices as shown by the curve 10A, and thereby it is possible to reduce the losses of energy and to suppress deterioration of the electricity storage device 15, as compared to the case in which these fluctuations are not reduced.

It should be understood that while, in this embodiment, an example was shown in which the fluctuations of the power $P_b$ supplied by the electricity storage device 15 to the various load devices were reduced by varying the power $P_a$ supplied to the temperature regulation device 12, it would also be acceptable to reduce the fluctuations of the power $P_b$ supplied by the electricity storage device 15 to the various load devices by varying the power supplied to the electrical power conversion device 13 or to some other load device; with the present invention, the number and the types of the load devices for which the power that is supplied is varied in order to enhance the overall efficiency $\eta$ are not to be considered as being particularly limited.

Embodiment 2

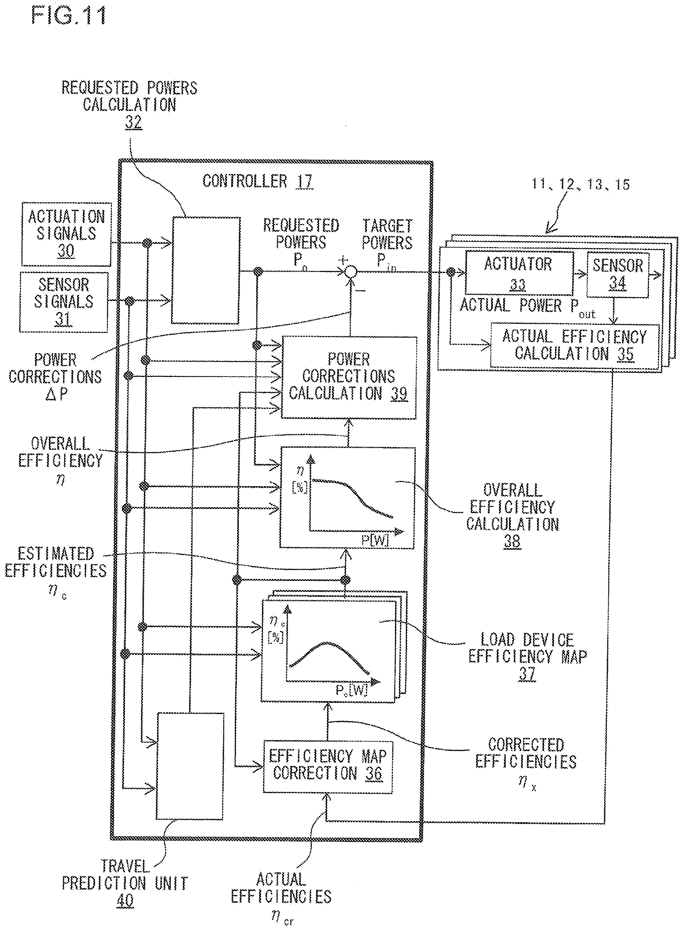

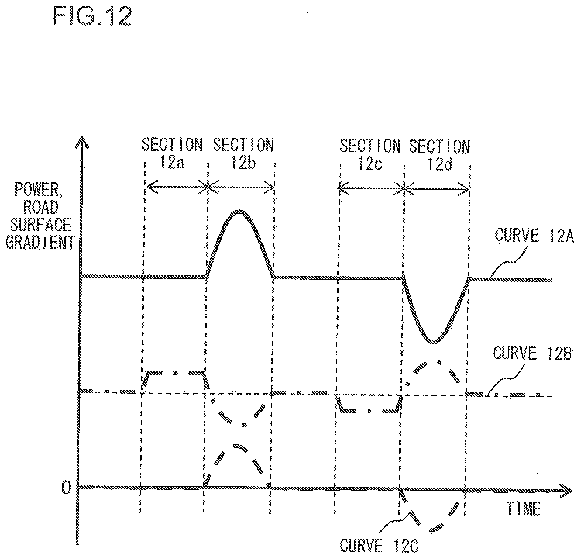

A second embodiment of the present invention will now be explained with reference to Figs. 11 and 12. The control system of this second embodiment has a travel prediction unit 40 added to the control system of the first embodiment shown in Fig. 2; apart from this feature, this second embodiment is the same as the first embodiment shown in Fig. 2. It should be understood that it would also be acceptable to add a travel prediction unit 40 to the control system of the variant of the first embodiment shown in Fig. 3; with the present invention, the control system to which a travel prediction unit may be provided is not to be considered as being particularly limited.

At predetermined intervals, the travel prediction unit 40 inputs signals from the actuation signals 30 specifying the amounts of actuation by the driver of the accelerator pedal and the brake pedal, and the set temperature upon the temperature regulation device 12 and/or its set amount of air flow and so on, and also inputs signals from the sensor signals 31 acquired by sensors of various types and specifying map information and position measurement information, vehicle speed, voltage and so on, and, on the basis of these signals, forecasts parameters related to the running state, such as future running speed and running distance, the resistance to vehicle motion, the traveling environment, and so on.

By the traveling environment is meant information related to operation of the temperature regulation device 12, such as the difference between the temperature inside the vehicle passenger compartment and the temperature set upon the temperature regulation device 12, the temperature exterior to the vehicle, and so on: by forecasting this traveling environment, temperature regulation at high accuracy becomes possible, and it is possible to prevent increase of energy losses due to excessive heating or cooling being applied. It should be understood that while, in this second embodiment, an example is shown in which the traveling environment that is forecast is taken as being defined by the difference between the temperature inside the vehicle passenger compartment and the temperature set upon the temperature regulation device 12 and by the temperature exterior to the vehicle, it would also be acceptable for it to include the insolation or the atmospheric pressure, the wind speed, the wind direction, and so on; with the present invention, the details of the traveling environment that are forecast are not to be considered as being particularly limited.

On the basis of the forecast future state as transmitted from the travel prediction unit 40, the power corrections calculation 39 performs forecasting calculation of the power supplied from the electricity storage device 15 to each of the load devices such as the motor-generator 11 and the temperature regulation device 12 and so on until the end of the unit time period $\Delta T$, and of the power that is converted into actual useful work by each of these load devices, and calculates power corrections $\Delta P$ so as to bring the overall efficiency $\eta$ to its maximum. The overall efficiency $\eta\Delta T$ until the end of the unit time period $\Delta T$ may be calculated using Equation (2):

$$\eta_{\Delta T} = \frac{\int_0^{\Delta T} \left( P_m \cdot \eta_m + P_a \cdot \eta_a + P_e \cdot \eta_e \right) dt}{\int_0^{\Delta T} \left( P_b \right) dt}$$

$$= \frac{\int_0^{\Delta T} \left( P_m \cdot \eta_m + P_a \cdot \eta_a + P_e \cdot \eta_e \right) dt}{\int_0^{\Delta T} \left\{ \left( P_m + P_a + P_e \right) + \left( \frac{P_m + P_a + P_e}{V_b} \right)^2 \cdot R \right\} dt} \quad \cdots (2)$$

In Equation (2), $\eta\Delta T$ is the overall efficiency until the end of the unit time period $\Delta T$, and the other parameters are the same as the parameters of Equation (1). It should be understood that, according to the number of load devices that are the objects for control, in the terms of Equation (2), either the products of the powers supplied to the load devices and their efficiencies, or the powers supplied to the load devices, are added together.

Fig. 12 shows the results of varying the power $P_a$ supplied to the temperature regulation device 12 so as to bring the overall efficiency $\eta$ to its maximum until the end of the unit time period $\Delta T$, on the basis of the forecast future state as forecast by the travel prediction unit 40. The curve 12A in Fig. 12 shows the power $P_m$ supplied to the motor-generator 11, the curve 12B shows the power $P_a$ supplied to the temperature regulation device 12, and the curve 12C shows the gradient of the road surface. In the power corrections calculation 39, if it is forecast that in the section 12b the gradient of the road surface will become greater so that the power $P_m$ to be supplied to the motor-generator 11 will increase, then in the section 12a, as shown by the curve 12B, the power $P_a$ supplied to the temperature regulation device 12 is temporarily increased in advance, while the power $P_a$ supplied to the temperature regulation device 12 is decreased in the section 12b. Furthermore if it is forecast that in the section 12d the gradient of the road surface will become less so that the power $P_m$ to be supplied to the motor-generator 11 will decrease, then in the section 12c, as shown by the curve 12B, the power $P_a$ supplied to the temperature regulation device 12 is temporarily decreased in advance, while the power $P_a$ supplied to the temperature regulation device 12 is increased in the section 12d.

By performing this kind of control, it is possible to reduce the fluctuations of the power supplied by the electricity storage device 15 to the various load devices 11, 12, and 13, and thus, along with enhancing the overall efficiency $\eta$ as compared with the case when the fluctuations are not reduced, also it is possible to prevent deterioration of the electricity storage device 15. It should be understood that while, in this second embodiment, an example is shown in which the power $P_a$ supplied to the temperature regulation device 12 is varied, it would also be acceptable to vary the power that is supplied to the electrical power conversion device 13 or to some other load device; with the present invention, the number and the types of the load devices for which the power that is supplied is varied so as to bring the overall efficiency $\eta$ to a maximum, or to bring the energy lost to a minimum, are not to be considered as being particularly limited.

Embodiment 3

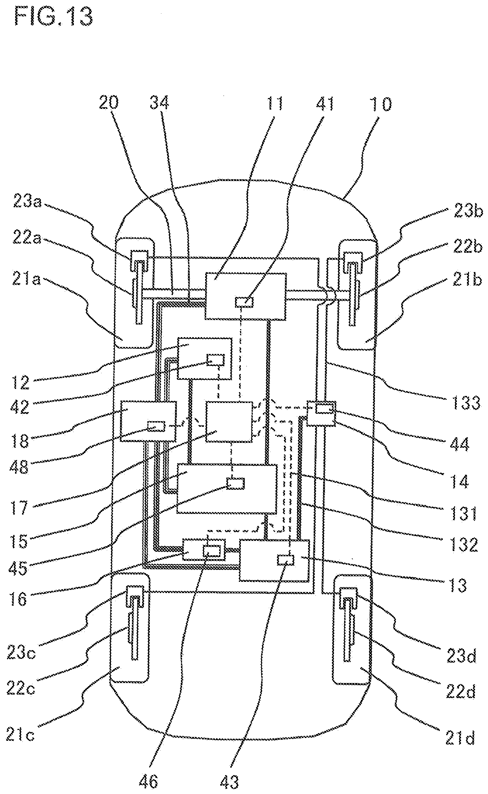

A third embodiment of the present invention will now be explained with reference to Fig. 13. While in this third embodiment an example will be presented in which, as in the case of the first and second embodiments, the present invention is applied to an electric vehicle of the front wheel drive type, the present invention could also be applied to an electric vehicle of the rear wheel drive type or of the four wheel drive type, to a hybrid electric vehicle that is also provided with an internal combustion engine, or to an electric vehicle for construction, an electric vehicle for a railroad, or indeed an electric vehicle of any kind.

This electric vehicle 10 of the third embodiment is one in which a thermal storage device 18 has been added to the electric vehicle 10 of the first embodiment shown in Fig. 1; the other details thereof are the same as those of the electric vehicle 10 shown in Fig. 1.

This thermal storage device 18 is a device that is connected to the motor-generator 11, the temperature regulation device 12, the electrical power conversion device 13, the electricity storage device 15, and the second electricity storage device 16, and that accumulates heat in a refrigerant or cooling water or the like that has been cooled or heated up by one or more of these various load devices. It should be understood that this thermal storage device 18 may accumulate heat or cold in a thermal medium such as a refrigerant or cooling water or the like that remains in the same physical state as it is cooled or heated, or may be adapted to accumulate heat or cold by causing a phase change of the thermal medium, such as freezing of cooling water into ice; it would also be acceptable to arrange to supply from the exterior of the vehicle a thermal medium that has been heated or cooled, such as a refrigerant or cooling water or the like. With the present invention, the thermal storage method should not be considered as being particularly limited.

This thermal storage device 18 is connected to the controller 17 and is controlled by the controller 17, in a similar manner to the motor-generator 11 and so on. When control is performed so as to keep down the drive load of the temperature regulation device 12, as in the section 12b shown in Fig. 12, the temperature in the vehicle passenger compartment is regulated by performing transfer of thermal energy from the thermal storage device 18. By performing this type of control, it is possible to compensate for the shortage of cooling or heating capability that originates due to the fact that the drive load of the temperature regulation device 12 is kept down.

With the embodiments and variant embodiments described above, examples have been shown in which the electrical power supplied from the electricity storage device 15 to the various load devices 11, 12, and 13, including the motor-generator 11, is regulated so as to enhance the overall efficiency of the plurality of load devices 11 through 13 that receive this supply of electrical power from the electricity storage device 15, or so as to reduce the fluctuations of the electrical power discharged from the electricity storage device 15. While it is not possible, in order to enhance the energy efficiency, to regulate the electrical power supplied to the motor-generator 11 to such an extent that it becomes impossible to implement the requested running state of the vehicle, since the electrical power supplied to the motor-generator 11 is the power that is necessary for implementing the running state requested by the driver or the control system, on the other hand, it would be possible to regulate the electrical power supplied to the motor-generator 11 while making a decision as to whether or not it is possible to perform energy saving operation while, by applying a reaction force to the accelerator pedal, inviting the driver to perform energy saving operation in order to enhance the energy efficiency, or while making certain sacrifices in the running state requested by the control system.

It should be understood that the embodiments and variant embodiments described above may be applied individually or in any practicable combination.

According to the embodiments and variant embodiments described above, the following beneficial operational effects may be obtained. First, since, in a control system for an electric vehicle that includes an electricity storage device 15 that performs charging and discharging of electrical power, a plurality of load devices 11 through 13 that receive supply of electrical power from the electricity storage device 15 and perform various operations, and a controller 17 that controls the electricity storage device 15 and the plurality of load devices 11 through 13, it is arranged for the controller 17, when electrical power is supplied from the electricity storage device 15 to the plurality of load devices 11 through 13, to calculate the charge/discharge efficiency of the electricity storage device 15 and the working efficiency of each of the load devices 11 through 13, and to regulate the amount of electrical power supplied from the electricity storage device 15 to each of the load devices 11 through 13, so as to enhance the overall system efficiency of the electricity storage device 15 and the plurality of load devices 11 through 13 taken as a group, accordingly it is possible to enhance the overall efficiency of the system of the electric vehicle as a whole, in other words to enhance the energy efficiency.

Furthermore since, according to the embodiments and variant embodiments described above, a motor-generator 11 for propelling the electric vehicle is included in the plurality of load devices 11 through 13, and since it is arranged, when the electrical power for driving the motor-generator 11 varies, for the controller 17 to regulate the electrical power supplied from the electricity storage device 15 to the load devices 12 and 13 other than the motor-generator 11, so as to enhance the overall efficiency in view of this variation of the electrical power for the motor-generator 11, accordingly, even if the fluctuations in the electrical power supplied to the motor-generator 11, which is a large load device of the electricity storage device 15, are large, still it is possible to maintain the overall energy efficiency of the system of the electric vehicle as a whole at a high level.

And since, according to the embodiments and variant embodiments described above, a temperature regulation device 12 that performs air conditioning of the interior of a passenger compartment or cooling of an onboard device is included in the plurality of load devices 11 through 13 other than the motor-generator 11, and since it is arranged for the controller 17 to reduce the electrical power for driving the temperature regulation device 12 when the electrical power for driving the motor-generator 11 has been increased, so that the overall efficiency after increase of the electrical power supplied to the motor-generator 11 is enhanced, and to increase the electrical power for driving the temperature regulation device 12 when the electrical power for driving the motor-generator 11 has been decreased, so that the overall efficiency after decrease of the electrical power supplied to the motor-generator 11 is enhanced, accordingly, even if the fluctuations of the electrical power supplied to the motor-generator 11, which is a large load device of the electricity storage device 15, are large, it is still possible to regulate the electrical power supplied to the temperature regulation device 12 so as to maintain a high overall level of energy efficiency for the system of the electric vehicle as a whole.

Moreover since, according to the embodiments and variant embodiments described above, an electrical power conversion device 13 that converts the electrical power of the electricity storage device 15 and supplies electrical power to another electricity storage device is included in the load devices other than the motor-generator 11, and since it is arranged for the controller 17 to reduce the electrical power supplied to the power conversion device 13 when the electrical power for driving the motor-generator 11 has been increased, so that the overall efficiency after increase of the electrical power supplied to the motor-generator 11 is enhanced, and to increase the electrical power supplied to the power conversion device 13 when the electrical power for driving the motor-generator 11 has been decreased, so that the overall efficiency after reduction of the electrical power supplied to the motor-generator 11 is enhanced, accordingly, even if the fluctuations of the electrical power supplied to the motor-generator 11, which is a large load device of the electricity storage device 15, are large, still it is possible to regulate the electrical power supplied to the electrical power conversion device 13 so as to maintain the overall energy efficiency of the system of the electric vehicle as a whole at a high level.

Still further since, according to the embodiments and variant embodiments described above, when electrical power is supplied from the electricity storage device 15 to the plurality of load devices 11 through 13, it is arranged for the controller 17 to regulate the electrical power supplied from the electricity storage device 15 to each of the plurality of load devices 11 through 13, so as to reduce fluctuations of the electrical power discharged from the electricity storage device 15, accordingly it is possible to suppress energy losses originating in fluctuations of the electrical power discharged from the energy storage device 15, so that, while still enhancing the overall energy efficiency of the system of the electric vehicle as a whole, it is also possible to prevent deterioration of the energy storage device 15.

And moreover since, according to the embodiments and variant embodiments described above, it is arranged for the controller 17, along with forecasting a future running state of the electric vehicle on the basis of the current running state of the electric vehicle as detected by a plurality of detectors 41 through 48 and on the basis of road map information and position measurement information 30 and 31, also, on the basis of the future running state that is the result of that forecast, to forecast the power that will be supplied from the electricity storage device 15 to each of the load devices 11 through 13 and the charge/discharge efficiency of the electricity storage device 15 and the working efficiency of each of the load devices 11 through 13 that will accompany that supply of electrical power, and regulates the electrical power supplied from the electricity storage device 15 to each of the load devices 11 through 13 in advance, so as to enhance the overall efficiency in that future running state, accordingly it is possible further to enhance the overall energy efficiency of the system of the electric vehicle as a whole, by taking into consideration its probable future running state.

Yet further since, according to the embodiments and variant embodiments described above, it is arranged for the controller 17 to forecast variation of the electric power that will be supplied for driving the motor-generator 11 on the basis of the future running state that is the result of that forecast, and, for a load device 12 or 13 other than the motor-generator 11 for which the supply of electrical power is regulated along with variation of the electrical power supplied to the motor-generator 11, temporarily to increase in advance the electrical power supplied to the load device 12 or 13 before the electrical power supplied to the motor-generator 11 increases, and temporarily to reduce in advance the electrical power supplied to the load device 12 or 13 before the electrical power supplied to the motor-generator 11 decreases, accordingly, even if the fluctuations of the electrical power supplied to the motor-generator 11, which is a large load device of the electricity storage device 15, are large, while still being able to enhance the overall energy efficiency of the system of the electric vehicle as a whole, for the load devices 12 and 13 other than the motor-generator 11 to which the supply of electrical power is regulated as well, it is possible to compensate for shortage of supply of electrical power occurring together with variation of the electrical power supplied to the motor-generator 11, and it is possible to satisfy the functions requested by the load devices 12 and 13 other than the motor-generator 11, while still being able to enhance the overall energy efficiency of the system of the electric vehicle as a whole.

Even further since, according to the embodiments and variant embodiments described above, along with a temperature regulation device 12 that performs air conditioning of the interior of a passenger compartment or cooling of an onboard device being included in the plurality of load devices 11 through 13, there is further included a thermal storage device 18 that accumulates heat or cold generated by the electricity storage device 15 and the plurality of load devices 11 through 13, and since it is arranged for the temperature regulation device 12 to perform heating or air conditioning of the interior of the passenger compartment and cooling of an onboard device using heat or cold accumulated in the thermal storage device 18, thus reducing the supply of electrical power from the electricity storage device 15 to the temperature regulation device 12, accordingly it is possible to perform heating or air conditioning of the interior of the passenger compartment and cooling of the onboard device by taking advantage of waste heat or waste cold, and, to that extent, it is possible yet further to enhance the overall energy efficiency of the system of the electric vehicle as a whole.

Furthermore since, according to the embodiments and variant embodiments described above, in a control system for an electric vehicle that includes an electricity storage device 15 that performs charging and discharging of electrical power, a plurality of load devices 11 through 13 that receive supply of electrical power from the electricity storage device 15 and perform various operations, and a controller 17 that controls the electricity storage device 15 and the plurality of load devices 11 through 13, it is arranged for the controller 17, when electrical power is supplied from the electricity storage device 15 to the plurality of load devices 11 through 13, to regulate the amount of electrical power supplied from the electricity storage device 15 to each of the load devices 11 through 13, so as to reduce fluctuations of the electrical power discharged from the electricity storage device 15, accordingly it is possible to suppress energy losses originating in fluctuations of the electrical power discharged from the electricity storage device 15, while still being able to enhance the overall energy efficiency of the system of the electric vehicle as a whole, and while being able to prevent deterioration of the electricity storage device 15.

Moreover since, according to the embodiments and variant embodiments described above, a motor-generator 11 for propelling the electric vehicle is included in the plurality of load devices 11 through 13, and since it is arranged for the controller 17 to regulate the electrical power supplied from the electricity storage device 15 to a load device 12 or 13 other than the motor-generator 11, so as to reduce fluctuations of the electrical power discharged from the electricity storage device 15 when the electrical power for driving the motor-generator 11 varies, accordingly, even if the fluctuations in the electrical power supplied to the motor-generator 11, which is a large load device of the electricity storage device 15, are large, still it is possible to suppress energy losses originating in fluctuations of the electrical power discharged from the electricity storage device 15, and thereby to prevent deterioration of the electricity storage device 15, while still being able to enhance the overall energy efficiency of the system of the electric vehicle as a whole.

Finally since, according to the embodiments and variant embodiments described above, it is arranged for the controller 17, along with forecasting a future running state of the electric vehicle on the basis of the current running state of the electric vehicle as detected by a plurality of detectors 41 through 48 and on the basis of road map information and position measurement information 30 and 31, also, on the basis of the future running state that is the result of that forecast, to forecast variation of the electric power that will be supplied for driving the motor-generator 11, and, for a load device 12 or 13 other than the motor-generator 11 for which the supply of electrical power is regulated along with this variation of the electrical power supplied to the motor-generator 11, temporarily to increase in advance the electrical power supplied to the load device 12 or 13 before the electrical power supplied to the motor-generator 11 increases, and temporarily to reduce in advance the electrical power supplied to the load device 12 or 13 before the electrical power supplied to the motor-generator 11 decreases, accordingly, even if the fluctuations in the electrical power supplied to the motor-generator 11, which is a large load device of the electricity storage device 15, are large, still it is possible to suppress energy losses originating in fluctuations of the electrical power discharged from the electricity storage device 15, and thereby to prevent deterioration of the electricity storage device 15, while still being able to enhance the overall energy efficiency of the system of the electric vehicle as a whole. In addition to the above, for the load devices 12 and 13 other than the motor-generator 11 to which the supply of electrical power is regulated as well, it is possible to compensate for shortage of supply of electrical power occurring together with variation of the electrical power supplied to the motor-generator 11, and it is possible to satisfy the functions requested by the load devices 12 and 13 other than the motor-generator 11, while still being able to enhance the overall energy efficiency of the system of the electric vehicle as a whole.

The above described embodiments are examples, and various modifications can be made without departing from the scope of the invention.

**Claims**

1.   A control system for an electric vehicle, comprising:

   an electricity storage device (15) that performs charging and discharging of electrical power;
   a plurality of load devices (11 - 13) that receive supply of electrical power from the electricity storage device (15) and perform various operations; and
   a control device that controls the electricity storage device (15) and the plurality of load devices (11 - 13), wherein:

      when electrical power is supplied from the electricity storage device (15) to the plurality of load devices (11 - 13), the control device regulates an amount of electrical power supplied from the electricity storage device (15) to each of the load devices (11 - 13) and calculates a charge/discharge efficiency of the electricity storage device (15),
      **characterized in that**
      when electrical power is supplied from the electricity storage device (15) to the plurality of load devices (11 - 13), the control device calculates a working efficiency of each of the load devices (11 - 13), and regulates the amount of electrical power supplied from the electricity storage device (15) to each of the load devices (11 - 13), so as to enhance an overall efficiency of the electricity storage device (15) and the plurality of load devices (11 - 13);
      an electric machine (11) for propelling the electric vehicle (10) is included in the plurality of load devices (11 - 13); and
      when the electrical power for driving the electric machine (11) varies, the control device regulates the electrical power supplied from the electricity storage device (15) to the load devices (12, 13) other than the electric machine (11), so as to enhance the overall efficiency with the electrical power for the electric machine (11) having varied.

2.   A control system for an electric vehicle, comprising:

an electricity storage device (15) that performs charging and discharging of electrical power;

a plurality of load devices (11 - 13) that receive supply of electrical power from the electricity storage device (15) and perform various operations; and

a control device that controls the electricity storage device (15) and the plurality of load devices (11 - 13), wherein:

when electrical power is supplied from the electricity storage device (15) to the plurality of load devices (11 - 13), the control device regulates an amount of electrical power supplied from the electricity storage device (15) to each of the load devices (11 - 13) and calculates a charge/discharge efficiency of the electricity storage device (15); and

a temperature regulation device (12) that performs air conditioning of an interior of a passenger compartment or cooling of an onboard device is included in the load devices (12,13) other than the electric machine (11), **characterized in that**

when electrical power is supplied from the electricity storage device (15) to the plurality of load devices (11 - 13), the control device calculates a working efficiency of each of the load devices (11 - 13), and regulates the amount of electrical power supplied from the electricity storage device (15) to each of the load devices (11 - 13), so as to enhance an overall efficiency of the electricity storage device (15) and the plurality of load devices (11 - 13);

an electric machine (11) for propelling the electric vehicle (10) is included in the plurality of load devices (11 - 13); and

the control device reduces the electrical power for driving the temperature regulation device (12) when the electrical power for driving the electric machine (11) has been increased, so that the overall efficiency after increase of the electrical power supplied to the electric machine (11) is enhanced, and increases the electrical power for driving the temperature regulation device (12) when the electrical power for driving the electric machine (11) has been decreased, so that the overall efficiency after decrease of the electrical power supplied to the electric machine (11) is enhanced.

3. The control system for an electric vehicle according to Claim 1, wherein:

a temperature regulation device (12) that performs air conditioning of the interior of a passenger compartment or cooling of an onboard device is included in the plurality of load devices (11 - 13);

there is further provided a thermal storage device (18) that accumulates heat or cold generated by the electricity storage device (15) and the plurality of load devices (11 - 13); and

the temperature regulation device (12) performs heating or air conditioning of the interior of the passenger compartment and cooling of an onboard device using heat or cold accumulated in the thermal storage device (18), thus reducing the electrical power supplied from the electricity storage device (15) to the temperature regulation device (12).

4. A control system for an electric vehicle, comprising:

an electricity storage device (15) that performs charging and discharging of electrical power;

a plurality of load devices (11 - 13) that receive supply of electrical power from the electricity storage device (15) and perform various operations; and

a control device that controls the electricity storage device (15) and the plurality of load devices (11 - 13), wherein:

when electrical power is supplied from the electricity storage device (15) to the plurality of load devices (11 - 13), the control device regulates an amount of electrical power supplied from the electricity storage device (15) to each of the load devices (11 - 13); and

an electric machine (11) for propelling the electric vehicle (10) is included in the plurality of load devices (11 - 13),

**characterized in that**

an electrical power conversion device (13) that converts the electrical power of the electricity storage device (15) and supplies electrical power to another electricity storage device (16) is included in the load devices (12, 13) other than the electric machine (11); and

the control device reduces the electrical power supplied to the power conversion device (13) when the electrical power for driving the electric machine (11) has been increased, so that the overall efficiency after increase of the electrical power supplied to the electric machine (11) is enhanced, and increases the electrical power supplied to the power conversion device (13) when the electrical power for driving the electric machine (11) has been decreased, so that the overall efficiency after decrease of the electrical power supplied to the electric machine (11) is enhanced.

5. The control system for an electric vehicle according to any one of Claims 1 through 4, wherein:

when electrical power is supplied from the electricity storage device (15) to the plurality of load devices (11 - 13), the control device regulates the amount of electrical power supplied from the electricity storage device (15) to each of the plurality of load devices (11 - 13), so as to reduce fluctuations of the electrical power discharged from the electricity storage device (15).

6. The control system for an electric vehicle according to any one of Claims 1 through 5, wherein:

the control device calculates electrical power requested to each of the load devices (11 - 13) based upon an amount of actuation by a driver and a running state of the electric vehicle (10) that are detected by a plurality of detectors.

7. The control system for an electric vehicle according to Claim 6, wherein:

each of the load devices (11 - 13) measures electric power used for actually being operated by using a plurality of detectors, and also calculates a working efficiency based upon the measured electrical power and the electrical powers that are supplied to each of the load devices (11 - 13).

8. The control system for an electric vehicle according to Claim 7, wherein:

the control device determines the electrical power to be supplied to each of the load devices (11 - 13) by correcting the requested electrical power for each of the load devices (11 - 13) by the working efficiency of each of the load devices (11 - 13).

9. A control system for an electric vehicle, comprising:

an electricity storage device (15) that performs charging and discharging of electrical power;
a plurality of load devices (11 - 13) that receive supply of electrical power from the electricity storage device (15) and perform various operations; and
a control device that controls the electricity storage device (15) and the plurality of load devices (11 - 13), wherein:

when electrical power is supplied from the electricity storage device (15) to the plurality of load devices (11 - 13), the control device regulates an amount of electrical power supplied from the electricity storage device (15) to each of the load devices (11 - 13) and calculates a charge/discharge efficiency of the electricity storage device (15)
**characterized in that**
when electrical power is supplied from the electricity storage device (15) to the plurality of load devices (11 - 13), the control device calculates a working efficiency of each of the load devices (11 - 13);
the control device forecasts a future running state of the electric vehicle (10) based upon a current running state of the electric vehicle (10) detected by a plurality of detectors (41 - 48) and based upon road map information (30) and position measurement information (31), also, based upon the future running state resulting from forecasting, forecasts electric power that will be supplied from the electricity storage device to each of the load devices and the charge/discharge efficiency of the electricity storage device and the working efficiency of each of the load devices that will accompany the forecasted electrical power, and regulates the electrical power supplied from the electricity storage device to each of the load devices in advance so as to enhance the overall efficiency **in that** future running state.

10. The control system for an electric vehicle according to Claim 9, wherein:

the control device forecasts variation of the electric power that will be supplied for driving the electric machine (11) based upon the future running state resulting from forecasting, and, for a load device (12, 13) other than the electric machine (11) for which the electrical power to be supplied is regulated along with the variation of the electrical power supplied to the electric machine (11), temporarily increases in advance the electrical power supplied to the load device (12, 13) before the electrical power supplied to the electric machine (11) increases, and temporarily reduces in advance the electrical power supplied to the load device (12, 13) before the electrical power supplied to the electric machine (11) decreases.

11. The control system for an electric vehicle according to Claim 1, wherein:

when electrical power is supplied from the electricity storage device (15) to the plurality of load devices (11 - 13), the control device regulates the amount of electrical power supplied from the electricity storage device (15) to each of the load devices (11 - 13), so as to reduce fluctuations of the electrical power discharged from the electricity storage device (15).

12. The control system for an electric vehicle according to Claim 11, wherein:

the control device regulates the electrical power supplied from the electricity storage device (15) to a load device (12, 13) other than the electric machine (11), so as to reduce fluctuations of the electrical power discharged from the electricity storage device (15) when the electrical power for driving the electric machine (11) varies.

13. The control system for an electric vehicle according to Claim 12, wherein:

the control device forecasts a future running state of the electric vehicle (10) based upon a current running state of the electric vehicle (10) detected by a plurality of detectors (41 - 48) and based upon road map information (30) and position measurement information (31), also, based upon the future running state resulting from forecasting, forecasts variation of the electric power that will be supplied for driving the electric machine (11), and, for a load device (12, 13) other than the electric machine (11) for which the supply of electrical power is regulated along with the variation of the electrical power supplied to the electric machine (11), temporarily increases in advance the electrical power supplied to the load device (12, 13) before the electrical power supplied to the electric machine (11) increases, and temporarily reduces in advance the electrical power supplied to the load device (12, 13) before the electrical power supplied to the electric machine (11) decreases.

**Patentansprüche**

1. Steuersystem für ein Elektrofahrzeug, das Folgendes umfasst:

eine Elektrizitätsspeichervorrichtung (15), die ein Laden und Entladen elektrischer Leistung ausführt;
mehrere Lastvorrichtungen (11-13), die eine Zufuhr elektrischer Leistung von der Elektrizitätsspeichervorrichtung (15) empfangen und verschiedene Operationen ausführen; und
eine Steuervorrichtung, die die Elektrizitätsspeichervorrichtung (15) und die mehreren Lastvorrichtungen (11-13) steuert, wobei:

dann, wenn elektrische Leistung von der Elektrizitätsspeichervorrichtung (15) den mehreren Lastvorrichtungen (11-13) zugeführt wird, die Steuervorrichtung die Menge elektrischer Leistung, die von der Elektrizitätsspeichervorrichtung (15) jeder der Lastvorrichtungen (11-13) zugeführt wird, reguliert und einen Lade-/Entladewirkungsgrad der Elektrizitätsspeichervorrichtung (15) berechnet,
**dadurch gekennzeichnet, dass**
dann, wenn elektrische Leistung von der Elektrizitätsspeichervorrichtung (15) den mehreren Lastvorrichtungen (11-13) zugeführt wird, die Steuervorrichtung einen Arbeitswirkungsgrad jeder der Lastvorrichtungen (11-13) berechnet und die Menge elektrischer Leistung, die von der Elektrizitätsspeichervorrichtung (15) jeder der Lastvorrichtungen (11-13) zugeführt wird, reguliert, um so einen Gesamtwirkungsgrad der Elektrizitätsspeichervorrichtung (15) und der mehreren Lastvorrichtungen (11-13) zu verbessern;
eine elektrische Maschine (11) für den Antrieb des Elektrofahrzeugs (10) unter den mehreren Lastvorrichtungen (11-13) vorhanden ist; und
dann, wenn sich die elektrische Leistung für den Antrieb der elektrischen Maschine (11) verändert, die Steuervorrichtung die elektrische Leistung, die von der Elektrizitätsspeichervorrichtung (15) den von der elektrischen Maschine (11) verschiedenen Lastvorrichtungen (12, 13) zugeführt wird, reguliert, um so den Gesamtwirkungsgrad bei sich verändernder elektrischer Leistung für die elektrische Maschine (11) zu verbessern.

2. Steuervorrichtung für ein Elektrofahrzeug, das Folgendes umfasst:

eine Elektrizitätsspeichervorrichtung (15), die ein Laden und Entladen elektrischer Leistung ausführt; mehrere Lastvorrichtungen (11-13), die eine Zufuhr elektrischer Leistung von der Elektrizitätsspeichervorrichtung (15) empfangen und verschiedene Operationen ausführen; und eine Steuervorrichtung, die die Elektrizitätsspeichervorrichtung (15) und die mehreren Lastvorrichtungen (11-13) steuert, wobei:

dann, wenn elektrische Leistung von der Elektrizitätsspeichervorrichtung (15) den mehreren Lastvorrichtungen (11-13) zugeführt wird, die Steuervorrichtung die Menge elektrischer Leistung, die von der Elektrizitätsspeichervorrichtung (15) jeder der Lastvorrichtungen (11-13) zugeführt wird, reguliert und einen Lade-/Entladewirkungsgrad der Elektrizitätsspeichervorrichtung (15) berechnet; und eine Temperaturregulierungsvorrichtung (12), die eine Klimatisierung eines Innenraums einer Fahrgastzelle ausführt oder eine bordinterne Vorrichtung kühlt, unter den von der elektrischen Maschine (11) verschieden Lastvorrichtungen (12-13 vorhanden ist, **dadurch gekennzeichnet, dass** dann, wenn elektrische Leistung von der Elektrizitätsspeichervorrichtung (15) den mehreren Lastvorrichtungen (11-13) zugeführt wird, die Steuervorrichtung einen Arbeitswirkungsgrad jeder der Lastvorrichtungen (11-13) berechnet und die Menge elektrischer Leistung, die von der Elektrizitätsspeichervorrichtung (15) jeder der Lastvorrichtungen (11-13) zugeführt wird, reguliert, um so einen Gesamtwirkungsgrad der Elektrizitätsspeichervorrichtung (15) und der mehreren Lastvorrichtungen (11-13) zu verbessern; eine elektrische Maschine (11) für den Antrieb des Elektrofahrzeugs (10) in den mehreren Lastvorrichtungen (11-13) enthalten ist; und die Steuervorrichtung die elektrische Leistung für den Antrieb der Temperaturregulierungsvorrichtung (12) verringert, wenn die elektrische Leistung für den Antrieb der elektrischen Maschine (11) zugenommen hat, so dass der Gesamtwirkungsgrad nach der Zunahme der elektrischen Leistung, die der elektrischen Maschine (11) zugeführt wird, verbessert wird, und die elektrische Leistung für den Antrieb der Temperaturregulierungsvorrichtung (12) erhöht, wenn die elektrische Leistung für den Antrieb der elektrischen Maschine (11) abgenommen hat, so dass der Gesamtwirkungsgrad nach der Abnahme der elektrischen Leistung, die der elektrischen Maschine (11) zugeführt wird, verbessert wird.

3.  Steuersystem für ein Elektrofahrzeug nach Anspruch 1, wobei:

eine Temperaturregulierungsvorrichtung (12), die eine Klimatisierung des Innenraums einer Fahrgastzelle ausführt oder eine bordinterne Vorrichtung kühlt, unter den mehreren Lastvorrichtungen (11-13) vorhanden ist; ferner eine Wärmespeichervorrichtung (18) vorgesehen ist, die Wärme oder Kälte, die durch die Elektrizitätsspeichervorrichtung (15) und die mehreren Lastvorrichtungen (11-13) erzeugt wird, akkumuliert; und die Temperaturregulierungsvorrichtung (12) ein Erwärmen oder Klimatisieren des Innenraums der Fahrgastzelle oder ein Kühlen einer bordinternen Vorrichtung unter Verwendung von Wärme oder Kälte, die in der Wärmespeichervorrichtung (18) akkumuliert worden ist, ausführt, um so die elektrische Leistung, die von der Elektrizitätsspeichervorrichtung (15) der Temperaturregulierungsvorrichtung (12) zugeführt wird, zu verringern.

4.  Steuersystem für ein Elektrofahrzeug, das Folgendes umfasst:

eine Elektrizitätsspeichervorrichtung (15), die ein Laden und Entladen elektrischer Leistung ausführt; mehrere Lastvorrichtungen (11-13), die eine Zufuhr elektrischer Leistung von der Elektrizitätsspeichervorrichtung (15) empfangen und verschiedene Operationen ausführen; und eine Steuervorrichtung, die die Elektrizitätsspeichervorrichtung (15) und die mehreren Lastvorrichtungen (11-13) steuert, wobei:

dann, wenn elektrische Leistung von der Elektrizitätsspeichervorrichtung (15) den mehreren Lastvorrichtungen (11-13) zugeführt wird, die Steuervorrichtung die Menge elektrischer Leistung, die von der Elektrizitätsspeichervorrichtung (15) jeder der Lastvorrichtungen (11-13) zugeführt wird, reguliert; und eine elektrische Maschine (11) für den Antrieb des Elektrofahrzeugs (10) unter den mehreren Lastvorrichtungen (11-13) vorhanden ist, **dadurch gekennzeichnet, dass** eine Vorrichtung (13) zum Umsetzen elektrischer Leistung, die elektrische Leistung der Elektrizitätsspeichervorrichtung (15) umsetzt und elektrische Leistung einer weiteren Elektrizitätsspeichervorrichtung (16) zuführt, unter den von der elektrischen Maschine (11) verschiedenen Lastvorrichtungen (12, 13) vorhanden ist; und

die Steuervorrichtung die elektrische Leistung, die der Leistungsumsetzungsvorrichtung (13) zugeführt wird, verringert, wenn die elektrische Leistung für den Antrieb der elektrischen Maschine (11) zugenommen hat, so dass der Gesamtwirkungsgrad nach der Zunahme der elektrischen Leistung, die der elektrischen Maschine (11) zugeführt wird, verbessert wird, und die elektrische Leistung, die der Leistungsumsetzungsvorrichtung (13) zugeführt wird, erhöht, wenn die elektrische Leistung für den Antrieb der elektrischen Maschine (11) abgenommen hat, so dass der Gesamtwirkungsgrad nach der Abnahme der elektrischen Leistung, die der elektrischen Maschine (11) zugeführt wird, verbessert wird.

5. Steuersystem für ein Elektrofahrzeug nach einem der Ansprüche 1 bis 4, wobei:

dann, wenn elektrische Leistung von der Elektrizitätsspeichervorrichtung (15) den mehreren Lastvorrichtungen (11-13) zugeführt wird, die Steuervorrichtung die Menge elektrischer Leistung, die von der Elektrizitätsspeichervorrichtung (15) jeder der mehreren Lastvorrichtungen (11-13) zugeführt wird, reguliert, um so Schwankungen der elektrischen Leistung, die von der Elektrizitätsspeichervorrichtung (15) entladen wird, zu verringern.

6. Steuersystem für ein Elektrofahrzeug nach einem der Ansprüche 1 bis 5, wobei:

die Steuervorrichtung elektrische Leistung, die für jede der Lastvorrichtungen (11-13) angefordert wird, anhand des Betrags einer Betätigung durch einen Fahrer und eines Fahrzustands des Elektrofahrzeugs (10), die durch mehrere Detektoren detektiert werden, berechnet.

7. Steuersystem für ein Elektrofahrzeug nach Anspruch 6, wobei:

jede der Lastvorrichtungen (11-13) elektrische Leistung, die verwendet wird, um sie tatsächlich zu betätigen, unter Verwendung mehrerer Detektoren misst und außerdem einen Arbeitswirkungsgrad anhand der gemessenen elektrischen Leistung und der elektrischen Leistungen, die jeder der Lastvorrichtungen (11-13) zugeführt werden, berechnet.

8. Steuersystem für ein Elektrofahrzeug nach Anspruch 7, wobei:

die Steuervorrichtung die elektrische Leistung, die jeder der Lastvorrichtungen (11-13) zugeführt werden soll, durch Korrigieren der angeforderten elektrischen Leistung für jede der Lastvorrichtungen (11-13) durch den Arbeitswirkungsgrad jeder der Lastvorrichtungen (11-13) bestimmt.

9. Steuersystem für ein Elektrofahrzeug, das Folgendes umfasst:

eine Elektrizitätsspeichervorrichtung (15), die ein Laden und Entladen elektrischer Leistung ausführt; mehrere Lastvorrichtungen (11-13), die eine Zufuhr elektrischer Leistung von der Elektrizitätsspeichervorrichtung (15) empfangen und verschiedene Operationen ausführen; und eine Steuervorrichtung, die die Elektrizitätsspeichervorrichtung (15) und die mehreren Lastvorrichtungen (11-13) steuert, wobei:

dann, wenn elektrische Leistung von der Elektrizitätsspeichervorrichtung (15) den mehreren Lastvorrichtungen (11-13) zugeführt wird, die Steuervorrichtung die Menge elektrischer Leistung, die von der Elektrizitätsspeichervorrichtung (15) jeder der Lastvorrichtungen (11-13) zugeführt wird, reguliert und einen Lade-/Entladewirkungsgrad der Elektrizitätsspeichervorrichtung (15) berechnet, **dadurch gekennzeichnet, dass** dann, wenn elektrische Leistung von der Elektrizitätsspeichervorrichtung (15) den mehreren Lastvorrichtungen (11-13) zugeführt wird, die Steuervorrichtung einen Arbeitswirkungsgrad jeder der Lastvorrichtungen (11-13) berechnet; die Steuervorrichtung einen zukünftigen Fahrzustand des Elektrofahrzeugs (10) anhand eines aktuellen Fahrzustands des Elektrofahrzeugs (10), der durch mehrere Detektoren (41-48) detektiert wird, und anhand von Straßenkarteninformationen (30) und Positionsmessinformationen (31) vorhersagt und außerdem anhand des künftigen Fahrzustands, der sich aus der Vorhersage ergibt, elektrische Leistung, die von der Elektrizitätsspeichervorrichtung jeder der Lastvorrichtungen zugeführt wird, und den Lade-/Entladewirkungsgrad der Elektrizitätsspeichervorrichtung und den Arbeitswirkungsgrad jeder der Lastvorrichtungen, die mit der vorhergesagten elektrischen Leistung einhergehen, vorhersagt und die elektrische Leistung, die von der Elektrizitätsspeichervorrichtung jeder der Lastvorrichtungen zugeführt wird, im Voraus reguliert, um so den Gesamtwirkungsgrad jenes künftigen Fahrzustands zu verbessern.

10. Steuersystem für ein Elektrofahrzeug nach Anspruch 9, wobei:

die Steuervorrichtung eine Veränderung der elektrischen Leistung, die für den Antrieb der elektrischen Maschine (11) zugeführt wird, anhand des künftigen Fahrzustands, der sich aus der Vorhersage ergibt, vorhersagt und für eine Lastvorrichtung (12, 13), die von der elektrischen Maschine (11) verschieden ist, für die die zuzuführende elektrische Leistung entsprechend der Veränderung der der elektrischen Maschine (11) zugeführten elektrischen Leistung reguliert wird, im Voraus die elektrische Leistung, die der Lastvorrichtung (12, 13) zugeführt wird, vorübergehend erhöht, bevor die der elektrischen Maschine (11) zugeführte elektrische Leistung zunimmt, und im Voraus die elektrische Leistung, die der Lastvorrichtung (12, 13) zugeführt wird, vorübergehend erniedrigt, bevor die der elektrischen Maschine (11) zugeführte elektrische Leistung abnimmt.

11. Steuersystem für ein Elektrofahrzeug nach Anspruch 1, wobei:

dann, wenn elektrische Leistung von der Elektrizitätsspeichervorrichtung (15) den mehreren Lastvorrichtungen (11-13) zugeführt wird, die Steuervorrichtung die Menge elektrischer Leistung, die von der Elektrizitätsspeichervorrichtung (15) jeder der Lastvorrichtungen (11-13) zugeführt wird, reguliert, um so Schwankungen der elektrischen Leistung, die von der Elektrizitätsspeichervorrichtung (15) entladen wird, zu verringern.

12. Steuersystem für ein Elektrofahrzeug nach Anspruch 11, wobei:

die Steuervorrichtung die elektrische Leistung, die von der Elektrizitätsspeichervorrichtung (15) einer Lastvorrichtung (12, 13), die von der elektrischen Maschine (11) verschieden ist, zugeführt wird, reguliert, um so Schwankungen der elektrischen Leistung, die von der Elektrizitätsspeichervorrichtung (15) entladen wird, zu verringern, wenn sich die elektrische Leistung für den Antrieb der elektrischen Maschine (11) verändert.

13. Steuersystem für ein Elektrofahrzeug nach Anspruch 12, wobei:

die Steuervorrichtung einen künftigen Fahrzustand des Elektrofahrzeugs (10) anhand eines aktuellen Fahrzustands des Elektrofahrzeugs (10), der durch mehrere Detektoren (41-48) detektiert wird, und anhand von Straßenkarteninformationen (30) und von Positionsmessinformationen (31) vorhersagt und außerdem anhand des künftigen Fahrzustands, der sich aus der Vorhersage ergibt, eine Veränderung der elektrischen Leistung, die für den Antrieb der elektrischen Maschine (11) zugeführt wird, vorhersagt und für eine Lastvorrichtung (12, 13), die von der elektrischen Maschine (11) verschieden ist, für die die Zufuhr elektrischer Leistung entsprechend der Veränderung der der elektrischen Maschine (11) zugeführten elektrischen Leistung reguliert wird, im Voraus die elektrische Leistung, die der Lastvorrichtung (12, 13) zugeführt wird, vorübergehend erhöht, bevor die der elektrischen Maschine (11) zugeführte elektrische Leistung zunimmt, und im Voraus die elektrische Leistung, die der Lastvorrichtung (12, 13) zugeführt wird, vorübergehend erniedrigt, bevor die der elektrischen Maschine (11) zugeführte elektrische Leistung abnimmt.

**Revendications**

1. Système de commande pour un véhicule électrique, comprenant : un dispositif de stockage d'électricité (15) qui effectue la charge et la décharge de puissance électrique ;
une pluralité de dispositifs consommateurs (11-13) qui reçoivent une alimentation de puissance électrique depuis le dispositif de stockage d'électricité (15) et qui exécutent diverses opérations ; et
un dispositif de commande qui commande le dispositif de stockage d'électricité (15) et la pluralité de dispositifs consommateurs (11-13), dans lequel :

quand une puissance électrique est alimentée depuis le dispositif de stockage d'électricité (15) vers la pluralité de dispositifs consommateurs (11-13), le dispositif de commande régule une quantité de puissance électrique alimentée depuis le dispositif de stockage d'électricité (15) à chacun des dispositifs consommateurs (11-13) et calcule une efficacité de charge/décharge du dispositif de stockage d'électricité (15),
**caractérisé en ce que**
quand une puissance électrique est alimentée depuis le dispositif de stockage d'électricité (15) à la pluralité de dispositifs consommateurs (11-13), le dispositif de commande calcule une efficacité de travail de chacun des dispositifs consommateurs (11-13) et régule la quantité de puissance électrique alimentée depuis le dispositif de stockage d'électricité (15) à chacun des dispositifs consommateurs (11-13), de manière à renforcer une efficacité globale du dispositif de stockage d'électricité (15) et de la pluralité de dispositifs consommateurs (11-13) ;

une machine électrique (11) pour propulser le véhicule électrique (10) est incluse dans la pluralité de dispositifs consommateurs (11-13) ; et

quand la puissance électrique pour piloter la machine électrique (11) varie, le dispositif de commande régule la puissance électrique alimentée depuis le dispositif de stockage d'électricité (15) aux dispositifs consommateurs (12, 13) autres que la machine électrique (11), de manière à renforcer l'efficacité globale alors que la puissance électrique pour la machine électrique (11) a varié.

2. Système de commande pour un véhicule électrique, comprenant :

un dispositif de stockage d'électricité (15) qui effectue la charge et la décharge de puissance électrique ;

une pluralité de dispositifs consommateurs (11-13) qui reçoivent une alimentation de puissance électrique depuis le dispositif de stockage d'électricité (15) et qui exécutent diverses opérations ; et

un dispositif de commande qui commande le dispositif de stockage d'électricité (15) et la pluralité de dispositifs consommateurs (11-13), dans lequel :

quand une puissance électrique est alimentée depuis le dispositif de stockage d'électricité (15) à la pluralité de dispositifs consommateurs (11-13), le dispositif de commande régule une quantité de puissance électrique alimentée depuis le dispositif de stockage d'électricité (15) à chacun des dispositifs consommateurs (11-13) et calcule une efficacité de charge/décharge du dispositif de stockage d'électricité (15) ; et

un dispositif de régulation de température (12) qui effectue le conditionnement d'air de l'intérieur d'un compartiment passager ou le refroidissement d'un dispositif embarqué est inclus dans les dispositifs consommateurs (12, 13) autres que la machine électrique (11),

**caractérisé en ce que**

quand une puissance électrique est alimentée depuis le dispositif de stockage d'électricité (15) à la pluralité de dispositifs consommateurs (11-13), le dispositif de commande calcule une efficacité de travail de chacun des dispositifs consommateurs (11-13), et régule la quantité de puissance électrique alimentée depuis le dispositif de stockage d'électricité (15) à chacun des dispositifs consommateurs (11-13), de manière à renforcer une efficacité globale du dispositif de stockage d'électricité (15) et de la pluralité de dispositifs consommateurs (11-13) ;

une machine électrique (11) pour propulser le véhicule électrique (10) est incluse dans la pluralité de dispositifs consommateurs (11-13) ; et

le dispositif de commande réduit la puissance électrique pour piloter le dispositif de régulation de température (12) quand la puissance électrique pour piloter la machine électrique (11) a été augmentée, de sorte que l'efficacité globale, après augmentation de la puissance électrique alimentée à la machine électrique (11), est renforcée, et augmente la puissance électrique pour piloter le dispositif de régulation de température (12) quand la puissance électrique pour piloter la machine électrique (11) a été diminuée, de sorte que l'efficacité globale après diminution de la puissance électrique alimentée à la machine électrique (11) est renforcée.

3. Système de commande pour un véhicule électrique selon la revendication 1, dans lequel :

un dispositif de régulation de température (12) qui effectue le conditionnement d'air de l'intérieur d'un compartiment passager ou le refroidissement d'un dispositif embarqué est inclus dans la pluralité de dispositifs consommateurs (11-13) ;

Il est en outre prévu un dispositif de stockage thermique (18) qui accumule de la chaleur ou du froid généré(e) par le dispositif de stockage d'électricité (15) et la pluralité de dispositifs consommateurs (11-13) ; et

le dispositif de régulation de température (12) effectue le chauffage ou le conditionnement d'air de l'intérieur du compartiment passager et le refroidissement d'un dispositif embarqué en utilisant la chaleur ou le froid accumulé dans le dispositif de stockage thermique (18), en réduisant ainsi la puissance électrique alimentée depuis le dispositif de stockage d'électricité (15) vers le dispositif de régulation de température (12).

4. Système de commande pour un véhicule électrique, comprenant :

un dispositif de stockage d'électricité (15) qui effectue une charge et une décharge de puissance électrique ;

une pluralité de dispositifs consommateurs (11-13) qui reçoivent une alimentation de puissance électrique depuis le dispositif de stockage d'électricité (15) et qui exécutent diverses opérations ; et

un dispositif de commande qui commande le dispositif de stockage d'électricité (15) et la pluralité de dispositifs consommateurs (11-13), dans lequel :

quand une puissance électrique est alimentée depuis le dispositif de stockage d'électricité (15) à la pluralité de dispositifs consommateurs (11-13), le dispositif de commande régule une quantité de puissance électrique alimentée depuis le dispositif de stockage d'électricité (15) à chacun des dispositifs consommateurs (11-13) ; et

une machine électrique (11) pour propulser le véhicule électrique (10) est incluse dans la pluralité de dispositifs consommateurs (11-13),

**caractérisé en ce que**

un dispositif de conversion de puissance électrique (13) qui convertit la puissance électrique du dispositif de stockage d'électricité (15) et qui alimente une puissance électrique à un autre dispositif de stockage d'électricité (16) est inclus dans les dispositifs consommateurs (12, 13) autres que la machine électrique (11) ; et

le dispositif de commande réduit la puissance électrique alimentée au dispositif de conversion de puissance (13) quand la puissance électrique pour piloter la machine électrique (11) a été augmentée, de sorte que l'efficacité globale après augmentation de la puissance électrique alimentée à la machine électrique (11) est renforcée, et augmente la puissance électrique alimentée au dispositif de conversion de puissance (13) quand la puissance électrique pour piloter la machine électrique (11) a été diminuée, de sorte que l'efficacité globale après diminution de la puissance électrique alimentée à la machine électrique (11) est renforcée.

5.   Système de commande pour un véhicule électrique selon l'une quelconque des revendications 1 à 4, dans lequel :

quand une puissance électrique est alimentée depuis le dispositif de stockage d'électricité (15) à la pluralité de dispositifs consommateurs (11-13), le dispositif de commande régule la quantité de puissance électrique alimentée depuis le dispositif de stockage d'électricité (15) à chacun de la pluralité de dispositifs consommateurs (11-13), de manière à réduire les fluctuations de la puissance électrique déchargée depuis le dispositif de stockage d'électricité (15).

6.   Système de commande pour un véhicule électrique selon l'une quelconque des revendications 1 à 5, dans lequel :

le dispositif de commande calcule la puissance électrique requise à chacun des dispositifs consommateurs (11-13) sur la base d'une quantité d'actionnement par un conducteur et un état de circulation du véhicule électrique (10), qui sont détectés par une pluralité de détecteurs.

7.   Système de commande pour un véhicule électrique selon la revendication 6, dans lequel :

chacun des dispositifs consommateurs (11-13) mesure la puissance électrique utilisée pour être réellement amené à fonctionner en utilisant une pluralité de détecteurs, et calcule également une efficacité de travail sur la base de la puissance électrique mesurée et des puissances électriques qui sont alimentées à chacun des dispositifs consommateurs (11-13).

8.   Système de commande pour un véhicule électrique selon la revendication 7, dans lequel :

le dispositif de commande détermine la puissance électrique à alimenter à chacun des dispositifs consommateurs (11-13) en corrigeant la puissance électrique requise pour chacun des dispositifs consommateurs (11-13) par l'efficacité de travail de chacun des dispositifs consommateurs (11-13).

9.   Système de commande pour un véhicule électrique, comprenant :

un dispositif de stockage d'électricité (15) qui effectue la charge et la décharge de puissance électrique ;
une pluralité de dispositifs consommateurs (11-13) qui reçoivent une alimentation de puissance électrique depuis le dispositif de stockage d'électricité (15) et qui exécutent diverses opérations ; et
un dispositif de commande qui commande le dispositif de stockage d'électricité (15) et la pluralité de dispositifs consommateurs (11-13), dans lequel :

quand une puissance électrique est alimentée depuis le dispositif de stockage d'électricité (15) à la pluralité de dispositifs consommateurs (11-13), le dispositif de commande régule une quantité de puissance électrique alimentée depuis le dispositif de stockage d'électricité (15) à chacun des dispositifs consommateurs (11-13) et calcule une efficacité de charge/décharge du dispositif de stockage d'électricité (15),

**caractérisé en ce que**

quand une puissance électrique est alimentée depuis le dispositif de stockage d'électricité (15) à la pluralité de dispositifs consommateurs (11-13), le dispositif de commande calcule une efficacité de travail de chacun des dispositifs consommateurs (11-13) ;

le dispositif de commande prédit un état de circulation futur du véhicule électrique (10) sur la base d'un état de circulation actuel du véhicule électrique (10) détecté par une pluralité de détecteurs (41-48) et sur la base d'une information de cartographie routière (30) est d'une information de mesure de position (31) et, sur la base de l'état de circulation future résultant de la prédiction, il prédit également une puissance électrique qui sera alimentée depuis le dispositif de stockage d'électricité à chacun des dispositifs consommateurs et l'efficacité de charge/décharge du dispositif de stockage d'électricité et l'efficacité de travail de chacun des dispositifs consommateurs qui vont accompagner la puissance électrique prédite, et régule à l'avance la puissance électrique alimentée depuis le dispositif de stockage d'électricité à chacun des dispositifs consommateurs, de manière à renforcer l'efficacité globale dans cet état de circulation futur.

**10.** Système de commande pour un véhicule électrique selon la revendication 9, dans lequel :

le dispositif de commande prédit une variation de la puissance électrique qui sera alimentée pour piloter la machine électrique (11) sur la base de l'état de circulation futur résultant de la prédiction et, pour un dispositif consommateur (12, 13) autre que la machine électrique (11) pour lequel la puissance électrique à alimenter est régulée ensemble avec la variation de la puissance électrique alimentée à la machine électrique (11), augmente temporairement à l'avance la puissance électrique alimentée au dispositif consommateur (12, 13) avant que la puissance électrique alimentée à la machine électrique (11) augmente, est réduit temporairement à l'avance la puissance électrique alimentée au dispositif consommateur (12, 13) avant que la puissance électrique alimentée à la machine électrique (11) diminue.

**11.** Système de commande pour un véhicule électrique selon la revendication 1, dans lequel :

quand une puissance électrique est alimentée depuis le dispositif de stockage d'électricité (15) à la pluralité de dispositifs consommateurs (11-13), le dispositif de commande régule la quantité de puissance électrique alimentée depuis le dispositif de stockage d'électricité (15) à chacun des dispositifs consommateurs (11-13), de manière à réduire les fluctuations de la puissance électrique déchargée depuis le dispositif de stockage d'électricité (15).

**12.** Système de commande pour un véhicule électrique selon la revendication 11, dans lequel :

le dispositif de commande régule la puissance électrique alimentée depuis le dispositif de stockage d'électricité (15) à un dispositif consommateur (12, 13) autre que la machine électrique (11), de manière à réduire les fluctuations de la puissance électrique déchargée depuis le dispositif de stockage d'électricité (15) quand la puissance électrique pour piloter la machine électrique (11) varie.

**13.** Système de commande pour un véhicule électrique selon la revendication 12, dans lequel :

le dispositif de commande prédit un état de circulation futur du véhicule électrique (10) sur la base d'un état de circulation actuel du véhicule électrique (10) détecté par une pluralité de détecteurs (41-48) et sur la base de l'information de cartographie routière (30) et d'une information de mesure de position (31), et sur la base de l'état de circulation futur qui résulte de la prédiction, il prédit également une variation de la puissance électrique qui sera alimentée pour piloter la machine électrique (11) et, pour un dispositif consommateur (12, 13) autre que la machine électrique (11) pour laquelle l'alimentation de puissance électrique est régulée ensemble avec la variation de la puissance électrique alimentée à la machine électrique (11), il augmente temporairement à l'avance la puissance électrique alimentée au dispositif consommateur (12, 13) avant que la puissance électrique alimentée à la machine électrique (11) augmente, et il réduit temporairement à l'avance la puissance électrique alimentée au dispositif consommateur (12, 13) avant que la puissance électrique alimentée à la machine électrique (11) diminue.

FIG.1

EP 2 325 973 B1

FIG.2

25

FIG.3

FIG.4

FIG.5

OVERALL EFFICIENCY

CURVE 5A

0

POWER (P$_a$) SUPPLIED TO TEMPERATURE REGULATION DEVICE

FIG.6

```
              ┌─────────────┐
              │    START    │
              └──────┬──────┘
                     │
    ┌────────────────────────────────┐
    │  ACQUIRE ACTUATION SIGNALS AND │ ～ S1
    │         SENSOR SIGNALS          │
    └────────────────┬───────────────┘
                     │
    ┌────────────────────────────────┐
    │  CALCULATE ESTIMATED EFFICIENCIES │ ～ S2
    │            η_c                   │
    └────────────────┬───────────────┘
                     │
    ┌────────────────────────────────┐
    │   ACQUIRE REQUESTED POWERS P_0  │ ～ S3
    └────────────────┬───────────────┘
                     │
```

GENERATE OVERALL EFFICIENCY MAP
- POWERS $P_1$ SUPPLIED TO THE LOAD DEVICES IN THE PREVIOUS CALCULATION CYCLE
- OVERALL EFFICIENCY $\eta_1$ WHEN POWERS $P_1$ WERE SUPPLIED
- MAXIMUM EFFICIENCY $\eta_2$
- POWERS $P_2$ TO BE SUPPLIED TO LOAD DEVICES FOR BRINGING OVERALL EFFICIENCY TO $\eta_2$

～ S4

S5

$\eta_2 > \eta_1$   NO

YES

CALCULATE POWER CORRECTIONS $\Delta P$

$$\Delta P = P_2 - P_1$$

～ S6

END

FIG.7

FIG.8

FIG.9

FIG.10

FIG.11

FIG.12

FIG.13

**REFERENCES CITED IN THE DESCRIPTION**

**Patent documents cited in the description**

- JP 2008070326 A
- US 2004124703 A
- US 2002062183 A